# EUROPÄISCHE PATENTSCHRIFT

(11) **EP 0 327 037 B1**
(45) Veröffentlichungstag und Bekanntmachung des Hinweises auf die Patenterteilung: **27.01.1993**
(21) Anmeldenummer: 89101665.1
(22) Anmeldetag: 01.02.1989
(51) Int. Cl.: A01M 7/00

(54) **Pflanzenschutz-Austragvorrichtung**
Plant protection sprayer
Pulvérisateur de protection de plantes

(30) Priorität: 03.02.1988 DE 3803145
(43) Veröffentlichungstag der Anmeldung: 09.08.1989
(73) Patentinhaber: NEUMO Grundbesitz-GmbH, D-75438 Knittlingen (DE)
(72) Erfinder: Ehrenberg, Henry, D-7134 Knittlingen (DE)
(74) Vertreter: Patentanwälte Ruff, Beier, Schöndorf und Mütschele

(56) Entgegenhaltungen:
- DE-U- 8 127 328
- FR-A- 2 501 461
- FR-A- 2 598 941
- FR-A- 2 606 672
- FR-A- 2 607 029
- GB-A- 2 157 935
- TRANSACTIONS OF THE AMERICAN SOCIETY OF AGRICULTURAL ENGINEERS. vol. 26, no. 3, Mai 1983, SAINT JOSEPH, MICH U Seiten 732 - 736; E.O.BEASLEY ET AL: "SATURATION SPRAYING OF BLUEBERRIES WITH PARTIAL SPRAY RECOVERY"

## Beschreibung

Die Erfindung betrifft eine Pflanzenschutz-Austragvorrichtung nach dem Oberbegriff des Patentanspruches 1.

Derartige Pflanzenschutz-Austragvorrichtungen dienen insbesondere zur Behandlung von hochstämmigen Pflanzen, wie das Weinreben sind, wobei die auszutragenden Medien dem Pflanzenschutz, der Düngung oder ähnlichen Behandlungen dienen können. Meist ist eine Applikation der Behandlungsmittel in der Art erwünscht, daß die Pflanzen auch im belaubten Zustand groß- bzw. ganzflächig sowohl am Pflanzenstamm und Ästen als auch an beiden Seiten der Laubblätter intensiv belegt bzw. benetzt sind.

Dies ist bei Wahrung einer hinreichend großen Arbeitsgeschwindigkeit sehr schwierig und wird von den bekannten Austragvorrichtungen nicht erfüllt. Vor allem führt der Einsatz großer Mengen von Behandlungsmedien zur Übersättigung des Erdbodens und damit zunehmend zu schlechteren Ernteergebnissen bzw. zu verstärkter Bodenbelastung durch das Ausbringungsmittel.

Bei der bisherigen Gebläse-Sprühtechnik erfolgt eine sehr starke Abdrift des Sprühnebels in die Umwelt und insbesondere das Umfeld der jeweiligen Kulturen. Wind- und Thermikeinflüsse tragen das ausgebrachte Medium unkontrolliert in die Atmosphäre, wobei teils das Wasser schon verdunstet.

Durch die DE-U-8 127 328 ist ein Pflanzenschutz-Sprühgerät bekanntgeworden, das für jede Behandlungszone ein gesondertes Querstromgebläse für einen Trägerluftstrom mit zugehöriger Düseneinheit und ggf. dieser im Abstand gegenüberliegend auf der anderen Seite der Behandlungszone eine Prallwand mit Auffangeinrichtung zur Rückführung überschüssigen Behandlungsmediums durch Druckförderung aufweist. Dieses Sprühgerät hat zahlreiche Nachteile, weil insbesondere die Rückführung des überschüssigen Behandlungsmediums problematisch, die Ausbildung der Gebläseanordnung kompliziert und die Sicherung gegen frei austretende und damit ohne Pflanzenbenetzung verlorengehande Sprühnebel unzureichend ist.

Der Erfindung liegt die Aufgabe zugrunde, eine Austragvorrichtung für Pflanzen-Behandlungsmedien zu schaffen, die bei hoher Arbeitsgeschwindigkeit eine intensive Applikation des Behandlungsmittels und dennoch ein weitestgehendes Fernhalten dieses Behandlunsmittels vom Erdboden gewährleistet.

Diese Aufgabe wird durch den Patentanspruch 1 gelöst. Es sind Mittel vorgesehen, welche die ausgetragenen, in der Luft bzw. im Luftstrom schwebenden, partikelartigen Teilchen des Behandlungsmediums, die sich nicht unmittelbar an der jeweiligen Pflanze niederschlagen, in einem Luftstrom ab- bzw. zurücksaugen und entweder wengistens teilweise unmittelbar wieder den Austragmitteln zuführen oder beispielsweise nach Abscheidung aus der Förderluft zwischenspeichern, um das so zwischengespeicherte, rückgesaugte Behandlungsmedium wieder einer geeigneten Verwendung zuführen zu können. Die Rücksaugeinrichtung weist zweckmäßig einen Saugluftförderer, nämlich beispielsweise ein Sauggebläse, auf, der auch gleichzeitig als Druckluftförderer beispielsweise zur Rückführung des rückgesaugten Behandlungsmediums zu den Austragmitteln oder für andere Funktionszwecke der Austragvorrichtung eingesetzt werden kann.

Die Austragvorrichtung ist insbesondere für Pflanzkulturen, wie landwirtschaftliche Reihenkulturen, geeignet und weist zur Erzielung einer direkten und ggf. konzentrierten Pflanzenbehandlung die eine oder mehrere jeweils über eine Pflanzenreihe zu verfahrende Austrageinheit auf. Diese Austrageinheit bildet als Behandlungszone eine Aufnahme, z.B. einen Durchlaß für die Pflanzen, und kann Austragmittel für Behandlungsmedien haben.

Statt der beschriebenen Ausbildung, insbesondere aber zusätzlich hierzu, ergibt sich eine sehr vorteilhafte Lösung der erfindungsgemäßen Aufgabe auch dann, wenn Mittel zur im wesentlichen vollständigen Umhüllung der jeweils zu behandelnden Pflanze mit einer Luftwirbelzone vorgesehen sind, durch die in allen Raumrichtungen liegende, vielfältige Luftströmungen gebildet werden, welche mehr oder weniger bzw. vollgesättigt die Partikelteilchen des Behandlungsmediums an alle Zonen der Pflanze tragen, oder, wenn sie die Pflanze nicht erreichen, stattdessen zur Rücksaugeinrichtung gelangen können. Die zur Erzeugung der Luftwirbelzone verwendete Luft kann die Ab- bzw. Druckluft des zuvor beschriebenen Luftförderers sein, so daß sich ein Kreislauf zwischen Rücksaug- und Austrag- bzw. Wirbelluftstrom ergibt, in welchem die rückgesaugten Partikelteilchen des Behandlungsmediums zumindest teilweise unmittelbar wieder ohne Zwischenabscheidung im umlaufenden Luftstrom den Pflanzen zugeführt werden.

Sofern eine Beaufschlagung des Luftförderers bzw. des Saug- und Druckgebläses mit dem Behandlungsmedium nicht erwünscht ist, kann im Strömungsweg der Rücksaugeinrichtung vor dem Luftförderer ein Abscheider für das Behandlungsmedium, beispielsweise ein Zyklon, vorgesehen sein, aus welchem das Behandlungsmedium dann einem Zwischenspeicher, beispielsweise dem Hauptspeicher für das Behandlungsmedium, zugeführt wird. Auf diese Weise kann auch nur ein Anteil des rückgesaugten Behandlungsmediums unmittelbar durch den Luftförderer geführt und der andere Anteil abgeschieden werden.

Die erfindungsgemäße Aufgabe läßt sich anstatt der beschriebenen Ausbildungen, insbesondere aber zusätzlich hierzu, auch in vorteilhafter Weise dadurch lösen, daß mindestens eine Begrenzung der Behandlungszone bzw. des Durchlasses wenigstens teilweise durch einen Luftvorhang gebildet ist, der sich z.B. dadurch ergibt, daß in der Fläche bzw. Ebene dieser Begrenzung von mindestens einer Begrenzungskante aus eine flächige Luftströmung erzeugt wird, die im Falle des Vorsehens einer Wirbelzone zweckmäßig stärker als deren Luftströmung ist, jedoch kontinuierlich in diese Wirbelzone übergehen bzw. an diese Wirbelzone anschließen kann. Dadurch ergibt sich im Zentrum des Durchlasses eine stark verwirbelte Luftströmung, die in Richtung zum Luftvorhang zunehmend gleichförmiger gerichtet und daher gegen einen Durchtritt durch diesen Luftvorhang abgeschirmt ist. Ein derartiger Luftvorhang eignet sich insbesondere für das vordere und/oder für das hintere offene Ende des Durchlasses, in welches die Pflanzen einlaufen bzw. aus welchem die Pflanzen den Durchlaß verlassen, jedoch könnte auch mindestens eine seitliche bzw. eine untere und/oder obere Begrenzung des Durchlasses wenigstens teilweise durch einen solchen Luftvorhang gebildet sein. Besonders vorteilhaft ist es, wenn der Luftvorhang durch Luft aus einander gegenüberliegenden und gegeneinander etwa parallel bzw. fluchtend gerichteten Luftdüsen gebildet ist, die in einer oder mehreren Reihen nebeneinander liegen können.

Die Absaugöffnungen der Rücksaugeinrichtung nehmen zweckmäßig den flächengrößten Teil der einen und/oder der anderen seitlichen Begrenzung oder stattdessen bzw. zusätzlich hierzu der oberen Begrenzung des Durchlasses ein, wobei der Flächenanteil der Absaugöffnung zwischen 50 und 90 %, vorzugsweise mindestens oder mehr als 70 % der zugehörigen Begrenzung betragen kann.

Um möglichst geringe Verluste des Behandlungsmittels zu gewährleisten, sind Mittel vorgesehen, die ein Abprallen bzw. reflektionsartiges Zurückspritzen des Behandlungsmediums von den Begrenzungen des Durchlasses verhindern. Diese, praktisch eine Aufpralldämpfung bildenden Mittel können z.B. durch Gitter, jalousieartige Lamellen oder ähnliches gebildet sein, welche vorzugsweise die jeweilige Absaugöffnung der Rücksaugeinrichtung abdecken bzw. begrenzen.

Zur Bildung der Luftwirbelzone einerseits und des jeweiligen Luftvorhanges andererseits können gesonderte Düsen oder aber auch dieselben Luftdüsen vorgesehen sein. In jedem Fall ist es zweckmäßig, wenn die einen und/oder die anderen dieser Luftdüsen am jeweiligen Ende des Durchlasses, insbesondere übereinander bzw. einander gegenüberliegend vorgesehen sind, wobei sie unmittelbar benachbart zu mindestens einer Absaugöffnung liegen können. Sind diese Luftdüsen hinsichtlich der Winkellage ihrer Düsenachsen gegenüber der Längsmittelebene des Durchlasses unabhängig voneinander richtungseinstellbar, so können einige Luftdüsen z.B. im wesentlichen gegen das Zentrum des Durchlasses bzw. der Wirbelzone gerichtet werden, während andere der Luftdüsen etwa rechtwinklig zur genannten Längsmittelebene ausgerichtet werden und dadurch den zugehörigen Luftvorhang bilden. Die Luftdüsen können stattdessen oder zusätzlich hierzu aber auch in Höhenrichtung richtungseinstellbar angeordnet sein, so daß in vorteilhafter Weise eine schräg von unten nach oben gerichtete Strömung im Durchlaß unterstützt wird.

Die Austragmittel der erfindungsgemäßen Vorrichtung können zum Austrag staub- bzw. pulverförmiger Behandlungsmittel oder stattdessen bzw. zusätzlich hierzu für den Austrag flüssiger Behandlungsmittel ausgebildet sein. Entsprechend kann auch der Abscheider für die Abscheidung trockener und/oder flüssiger Behandlungsmedien ausgebildet sein. Im Falle flüssiger Behandlungsmedien weisen die Austragmittel zweckmäßig Austragdüsen auf, die etwa in der Mitte zwischen den Enden des Durchlasses bzw. zwischen den Luftvorhängen vorgesehen sind, wobei Austragdüsen übereinander und/oder einander gegenüberliegend auf beiden Seiten des Durchlasses vorgesehen sein können. Sind die auf einer Seite liegenden Austragdüsen gegen die gegenüberliegende Absaugöffnung der Rücksaugeinrichtung gerichtet oder liegen die jeweiligen Austragdüsen unmittelbar vor der auf der zugehörigen Seite vorgesehenen Absaugöffnung, so kann die Rücksaugung noch wesentlich verbessert werden. Auch die Austragdüsen sind zweckmäßig in Höhen- bzw. Längsrichtung des Durchlasses richtungseinstellbar, wobei die Düsenstrahle der Austragdüsen und der Wirbelluftdüsen zweckmäßig im Zentrum des Durchlasses bzw. der Wirbelzone aufeinandertreffen.

Die in den Erdboden eindringenden Verluste an Behandlungsmittel können auch dadurch wesentlich reduziert werden, daß die beispielsweise der Nebelrücksaugung dienende Rücksaugeinrichtung von ihrer jeweiligen Absaugöffnung im wesentlichen ausschließlich nach oben gerichtete Strömungswege innerhalb der zugehörigen Austrageinheit aufweist, was z.B. dadurch erreicht werden kann, daß ein an die Saugseite des Luftförderers anzuschließender Absauganschluß an der Oberseite des Durchlasses liegt.

Durch die erfindungsgemäße Ausbildung ist es in einem z.B. geschlossenen Strömungs-System möglich, Behandlungsmedien zu spritzen und die überschüssigen Mediennebel rückzusaugen oder stattdessen bzw. zusätzlich hierzu Behandlungsmedien zu sprühen, im Bereich der zu behandelnden Pflanze in Verwirbelung zu halten und ebenfalls die überschüssigen Mediennebel wieder rückzusaugen. Es ist auch denkbar, das Behandlungsmedium unmittelbar in den Förderluftstrom im Bereich der Luftdüse, im Bereich des zu dieser führenden Druckkanales und/oder im Bereich des Saugkanales des Luftförderers einzuspritzen bzw. zuzuführen, was z.B. auch im Bereich eines Venturi-Rohres erfolgen kann, wobei zweckmäßig das Behandlungsmedium unter Druck in das Venturi-Rohr gefördert wird. Als Luftförderer bzw. Gebläse kann ein Axial- und/oder Radial-Gebläse vorgesehen sein, je nachdem, ob höhere Drücke und Strömungsgeschwindigkeiten oder höhere Luftfördermengen gewünscht werden. Es können aber auch die in der Landwirtschaft bereits zahlreich vorhandenen, üblichen Fördergebläse und Spritzmittelpumpen der gebräuchlichen, meist mit einem Fahrgestell integrierten Sprühgeräte verwendet werden, wobei ggf. lediglich der Gebläserotor zur Erhöhung des Wirkungsgrades ausgewechselt zu werden braucht.

Die Verwendung solcher Luftförderer hat auch den Vorteil, daß die geförderte Luft erwärmt wird und insofern auch durch thermische Wirkung die nach oben gerichtete Strömung unterstützt wird. Statt des jeweiligen Luftvorhanges und/oder zusätzlich hierzu kann auch ein flexibler Vorhang, nach Art von selbst zurückschwingenden, paarweise einander gegenüberliegenden Türblättern aus flexiblem Kunststoffmaterial vorgesehen sein. Sofern innerhalb des Durchlasses mit einem Luftüberdruck gearbeitet wird, kann dieser Druck dafür eingesetzt werden, diesen Vorhang gegen die auf ihn wirkende Rückstellkraft in einer gewünschten Öffnungslage zu halten.

Eine besonders vorteilhafte Weiterbildung des Erfindungsgegenstandes besteht darin, daß Mittel vorgesehen sind, um einen Behandlungsstrom, nämlich z.B. einen Luftstrom und/oder einen Partikelstrom aus Behandlungsmedium im Bereich der Behandlungszone bzw. so umzulenken, daß wenigstens Teile desselben Behandlungsstromes zwei- oder mehrfach in derselben Richtung oder in unterschiedlichen Richtungen die Behandlungszone und damit die jeweilige Pflanze so durchströmen, daß diese Pflanze ihm zeitlich aufeinanderfolgend mehrfach ausgesetzt ist. Trägt der Behandlungsstrom Behandlungsmedium, so wird wenigstens ein Teil der beim vorangehenden Durchgang durch die Pflanze nicht abgelagerten Partikel ohne Zwischenabscheidung nochmals gegen die Pflanze gerichtet und ggf. an dieser dann erst, beispielsweise von der entgegengesetzten oder einer im Winkel dazu liegenden Seite abgelagert. Dabei können Mittel vorgesehen sein, die vor, während oder nach der Umlenkung den Behandlungsstrom hinsichtlich seiner Strömungsenergie und seiner Sättigung mit Behandlungsmedium wieder dadurch aufladen, daß z.B. erneut Trägerluft und/oder partikelartig zerstäubtes Behandlungsmedium zugeführt wird. Sofern die über einen Umlenkbereich von beispielsweise höchstens 90° bis geringfügig mehr als 180° aneinanderschließenden Strömungsbahnen des Behandlungsstromes nicht übereinander liegen, sind sie zweckmäßig etwa horizontal, nämlich z.B. in Laufrichtung hintereinander und im Abstand zueinander insbesondere so vorgesehen, daß zwischen ihnen ein Querabstand gegeben ist, der etwa in der Größenordnung der zugehörigen Strömungsquerschnitt-Erstreckung mindestens eines der Behandlungsströme liegt. Vor allem dadurch kann in dem Raum zwischen den Strömungsbahnen eine etwa im Zentrum der Behandlungszone liegende, rotierende Wirbelströmungswalze erzeugt werden, welche z.B. im Falle hochstämmiger Pflanzen annähernd um deren aufrechte Stammachse bzw. um eine Wirbelachse rotiert, die etwa in der zugehörigen Axialebene der Pflanzenreihe liegt. Die Aufladung des Behandlungsstromes im Bereich der jeweiligen Strömungsbahn kann zweckmäßig mit einem Trägerluftstrom erfolgen, der gleichzeitig an der von der benachbarten Strömungsbahn abgekehrten Außenseite der zugehörigen Strömungsbahn bzw. am zugehörigen, beispielsweise vorderen Ende des Durchlasses einen gegen Austritt von Partikeln des Behandlungsmediums abschirmenden Luftvorhang bildet, welcher gleichzeitig auch zur weiteren Ablenkung des Behandlungsstromes auf dieser Strömungsbahn im Drehsinn der Umlenkung beitragen kann.

Gemäß der Erfindung werden des weiteren Mittel vorgeschlagen, mit welchen der Behandlungsstrom im Bereich derselben Seite der Behandlungszone, insbesondere im Bereich der dem Gebläse zugehörigen Begrenzung, ausgetragen und wieder rückgesaugt wird, wobei den frei und lediglich durch Strömungsrichtung die Behandlungszone durchsetzenden, durch aufeinanderfolgende Abschnitte des Behandlungsstromes gebildeten Strömungsbahnen mindestens eine Umleit-Einrichtung mit einem Umleiteingang, einem im Abstand dazu liegenden Umlenkausgang und ggf. mit im Strömungsquerschnitt liegenden Körpern einer Abscheide- oder einer Strömungsumlenk-Einrichtung zugeordnet sind. Entsprechende Körper können auch im Bereich der gebläseseitigen Rücksaugung vorgesehen sein, wobei diese, z.B. durch Lamellensätze gebildeten Körper sowohl zur Strömungsumlenkung als auch dazu dienen, zu große und daher vom Trägerluftstrom schwer förderbare Partikel des Behandlungsmediums abzuscheiden. Diese werden dann zweckmäßig nach unten abfließend gesammelt und entweder direkt zu den Austragdüsen und/oder zu einem Speicherbehälter zurückgeführt. Zur Umlenkung des Behandlungsstromes ist zweckmäßig eine rinnen-, wannen- oder schalenförmige Umleit-Wandung vorgesehen, die mit ihrer aufrechten Schalenwandung dem Gebläseausgang und dem Gebläseeingang gegenübersteht.

Damit der Strömungsquerschnitt sowie die Strömungsausrichtung des jeweiligen Abschnittes des Behandlungsstromes auf die jeweilige Pflanzenform sowie den jeweiligen Belaubungszustand der Pflanzen eingestellt werden kann, ist im Bereich wenigstens einer für den Ausgang bzw. den Eingang des Behandlungsstromes dienenden Öffnung wenigstens ein verstellbarer Strömungs-Richtkörper vorgesehen, wobei diese Öffnung zweckmäßig an ihrer hinsichtlich der Laufrichtung vorderen und/oder hinteren aufrechten Begrenzung mit einer Leitklappe versehen ist, welche um eine aufrechte Achse schwenkbar ist. Dadurch kann die Öffnung in Austrag- bzw. Eingangsrichtung trichterartig erweitert, parallel begrenzt oder trichterartig verengt sowie durch gleichgerichtetes Schwenken beider Klappen unterschiedlich ausgerichtet werden. Solche Leitklappen sind insbesondere am Gebläseausgang und am Umlenkausgang bzw. an dem zu diesem benachbarten Ausgang zur Zuführung des Beschleuniger-Luftstromes und/oder zusätzlichen Behandlungsmediums vorteilhaft, wobei die zugehörige Klappe z.B. des Gebläseausganges auch gleichzeitig die benachbarte, den Gebläseeingang bildende Öffnung gegenüber dem Gebläseausgang abschirmen kann, so daß diese beiden Öffnungen im wesentlichen unmittelbar benachbart bzw. hintereinander liegen können. Zweckmäßig sind die dem jeweiligen Ausgang zugehörigen Austragdüsen ebenfalls um eine den Schwenkachsen der Leitklappen entsprechende Achse hinsichtlich ihrer Düsenausrichtung verstellbar, wobei sie vorteilhaft so mit mindestens einer der jeweils zugehörigen Leitklappen gekoppelt sind, daß sie mit dieser von selbst gemeinsam verstellt werden und somit zumindest gegenüber dieser Leitklappe stets dieselbe Ausrichtung aufweisen.

Je nachdem, welche Gebläseart für die erfindungsgemäße Austragvorrichtung verwendet wird, können für die jeweilige Austrageinheit ein, zwei oder mehr Gebläse, z.B. Axialgebläse, Radialgebläse, Querstrom- bzw. Tangentialgebläse o.dgl. verwendet werden. Besonders vorteilhaft ist es jedoch, wenn die Austragvorrichtung für zwei oder mehr zueinander benachbarte Behandlungszonen nur ein einziges Gebläse aufweist, das vorteilhaft als Axialgebläse ausgebildet ist. Dieses Gebläse weist eine axiale Gebläse-Ansaugöffnung und eine axial unmittelbar benachbart dazu bzw. zum Gebläseläufer liegende, radial nach außen gerichtete Gebläse-Drucköffnung auf. Das Gebläse bzw. der Gebläseläufer kann dabei so ausgebildet sein, daß es nicht abgeschiedenes Behandlungsmedium aufnimmt und mit dem von ihm erzeugten Trägerluftstrom fein verteilt in Partikeln sofort wieder abgibt. Des weiteren kann unterhalb des Gebläses bzw. des Gebläseläufers eine Auffangwanne für eventuell abgeschiedenes Behandlungsmedium vorgesehen sein, das dann von dieser Auffangwanne entweder unmittelbar zu den Austragdüsen oder zum Speichertank zurückgeführt wird.

Um ein verhältnismäßig einfach gestaltetes Gebläse verwenden bzw. bereits vorhandene Gebläse oder Austragvorrichtungen auf die erfindungsgemäße Ausbildung in einfacher Weise umrüsten zu können, ist zweckmäßig ein Leitgehäuse für die Aufnahme des Gebläses vorgesehen, das dann den gegenüber der Drucköffnung des Gebläses anders ausgerichteten Gebläseausgang bzw. den gegenüber der Gebläse-Ansaugöffnung anders ausgerichteten Rücksaugeingang begrenzt, der zweckmäßig ebenfalls etwa radial zur Gebläseachse ausgerichtet ist, so daß der radial rückgesaugte Teil des Behandlungsstromes in dem Leitgehäuse axial in das Gebläse umgelenkt wird.

Die erfindungsgemäße Austragvorrichtung ist vorteilhaft derart zerlegbar und/oder verstellbar, daß mit ihr unterschiedliche Austragverfahren durchgeführt werden können bzw. daß sie in einfacher Weise an bereits vorhandene Sprühgeräte angebaut und im Falle der Nichtbenutzung raumsparend transportiert bzw. aufbewahrt werden kann. Besonders zweckmäßig ist es, wenn die dem Gebläse gegenüberliegende, beispielsweise durch die Umleit-Einrichtung gebildete Begrenzung der Behandlungszone durch Schwenken o.dgl. in eine axial im wesentlichen an das Gebläse anschließende sowie zum Umfang des Gebläses bzw. des Leitgehäuses sehr nahe Lage überführt werden kann, in welcher dem Gebläseausgang bzw. den zugehörigen Austragdüsen dann keine Begrenzung gegenüberliegt, so daß der Behandlungsstrom dann in üblicher Weise ungehindert und unbegrenzt ins Freie ausgebracht werden kann.

Wie dargelegt, kann der bzw. ein Primär-Trägerluftstrom auch von einer im Winkel bzw. im Abstand zur Gebläseeinheit liegenden Begrenzung der Behandlungszone, nämlich z.B. von der gegenüberliegenden Begrenzung ausgehen, wobei dann die Gebläseeinheit eine Umleit-Einrichtung für den Behandlungsstrom bilden kann. Es kann also ein Behandlungsstrom im Kreislauf durch zwei z.B. im Abstand gegenüberliegende Umleit-Einrichtungen kontinuierlich geführt und im Bereich jeder Umleit-Einrichtung hinsichtlich seiner Strömungsenergie und/oder seiner Sättigung mit Behandlungsmedium stets wieder so aufgeladen werden, daß seine Strömungsenergie bzw. Sättigung im Bereich der die Behandlungszone frei kreuzenden Strömungsbahnen im wesentlichen konstant bleibt. Um hierfür nur ein einziges Gebläse zu benötigen, ist die der Gebläseeinheit gegenüberliegende Begrenzung der Behandlungszone über gegliederte, in sich gelenkige bzw. flexible Kanalausleger an die Gebläseeinheit bzw. an die Gebläse-Drucköffnung und/oder an die Gebläse-Ansaugöffnung angeschlossen. Im Falle des Anschließens an die Ansaugöffnung kann der gegen die gegenüberliegende Begrenzung gerichtete Behandlungsstrom im Hinblick auf den Umleiteingang noch besser ausgerichtet bzw. gefördert werden. Der oder die Kanalausleger liegen zweckmäßig an der Oberseite der Behandlungszone und können über geeignete Dichtglieder, z.B. elastische, manschettenartige Rollmembranen beweglich an die gegenüberliegende Begrenzung so angeschlossen sein, daß sie lediglich von oben nach unten leicht lösbar eingesteckt sind. Eine obere, nach Art einer Wandabschirmung ausgebildete Abdeckung der Behandlungszone kann in einfacher Weise durch eine flexible Folie bzw. durch eine aufgehängte oder gespannte Schutzplane gebildet sein, die zweckmäßig unmittelbar an der Unterseite des bzw. der Kanalausleger liegt, wenigstens teilweise an diesen befestigt ist und daher deren Gelenkbewegungen in keiner Weise beeinträchtigt.

Zur Anpassung der Breite der Behandlungszone bzw. des Durchlasses an die jeweils zu behandelnden Pflanzen ist die Behandlungszone, vorteilhaft mit gelenkigen Auslegern, die auch die Kanalausleger tragen oder stützen bzw. durch diese Kanalausleger gebildet sein können, in wenigstens einem Bereich ihrer Höhe, insbesondere im oberen und unteren Bereich unterschiedlich bzw. gesondert breitenverstellbar. Zum Beispiel kann die der Gebläseeinheit gegenüberliegende Begrenzung der Behandlungszone in ihrem oberen Bereich um eine etwa horizontale, zur Laufrichtung annähernd parallele Achse schwenkbar an dem Ausleger angeordnet sein, so daß sie schräg nach außen oder innen geneigt eingestellt werden kann. Ferner kann dadurch diese Begrenzung in eine etwa horizontale, oberhalb der Pflanzen liegende Lage geschwenkt werden, was es ermöglicht, die Austragvorrichtung beim Wenden hinsichtlich ihrer Laufrichtung ohne Behinderung über den Pflanzen nach Art frei ausragender Arme zu bewegen.

Es ist zwar denkbar, die Austragvorrichtung an einem an ein Motor- bzw. Zugfahrzeug gelenkig anzukuppelnden Anhänger anzuordnen, jedoch ergibt sich eine hinsichtlich der Laufgenauigkeit besonders vorteilhafte Ausbildung, wenn die Austragvorrichtung mit einem Traggestell o.dgl. wenigstens hinsichtlich der Seitenführung im wesentlichen starr am Fahrgestell eines Motorfahrzeuges, beispielsweise eines Traktors oder Schleppers angeordnet ist, wobei das Traggestell frei schwebend vom Fahrgestell abstehen oder ggf. noch zusätzlich mit mindestens einem auf dem Boden laufenden Stützrad versehen sein kann. Zweckmäßig ist die Austragvorrichtung z.B. dadurch heb- und senkbar, daß sie mit Kupplungsgliedern am hydraulisch heb- und senkbaren, sog. Dreipunkt-Gestänge des Motorfahrzeuges getragen montiert werden kann. Dadurch ergibt sich eine aufgesattelte Anordnung der Austragvorrichtung an der Zugmaschine. Eine andere Anordnung und Ausbildung bzw. Weiterbildung der Austragvorrichtung ergibt sich aufgrund der DE-A- 37 38 518.6, auf die wegen weiterer Einzelheiten, Merkmale und Wirkungen Bezug genommen wird.

Ein Ausführungsbeispiel der Erfindung ist in den Zeichnungen dargestellt und wird im folgenden näher erläutert. In den Zeichnungen zeigen:
Fig. 1 eine erfindungsgemäße Pflanzenschutz-Austragvorrichtung in vereinfachter Darstellung und in Fahrrichtung gesehen,
Fig. 2 einen Teil der Austragvorrichtung gemäß Fig. 1 in Draufsicht,
Fig. 3 eine Austrageinheit einer Austragvorrichtung in perspektivischer und teilweise geschnittener Darstellung,
Fig. 4 eine weitere Ausführungsform einer Austrageinheit in Fahrrichtung gesehen, jedoch ohne Düsen und Leitungsanschlüsse,
Fig. 5 das zur Umrüstung mit einer erfindungsgemäßen Austragvorrichtung geeignete Grundgerät in Seitenansicht,
Fig. 6 eine weitere Ausführungsform einer Austragvorrichtung in Seitenansicht,
Fig. 7 die Austragvorrichtung gemäß Fig. 6 mit weiterer Ausrüstung,
Fig. 8 die Austragvorrichtung gemäß Fig. 7 in Ansicht von hinten,
Fig. 9 einen Ausschnitt der Austragvorrichtung gemäß Fig. 8 in Draufsicht und in einer ersten Betriebstellung,
Fig. 10 die Austragvorrichtung gemäß Fig. 9 in einer weiteren Betriebstellung,
Fig. 11 die Austragvorrichtung gemäß Fig. 9 in einer Außerbetriebstellung von Funktionsteilen,
Fig. 12 die Gebläseeinheit der Austragvorrichtung gemäß den Fig. 7 bis 12 in Draufsicht,
Fig. 13 ein weiteres Ausführungsbeispiel einer Austragvorrichtung in einer Darstellung entsprechend Fig. 6,
Fig. 14 eine weitere Ausführungsform einer Austragvorrichtung in einer Darstellung entsprechend den Figuren 6 und 13, jedoch teilweise geschnitten,
Fig. 15 die Austragvorrichtung gemäß Fig. 14 in Ansicht auf die Rückseite und
Fig. 16 die Austragvorrichtung gemäß Fig. 15 in Draufsicht.

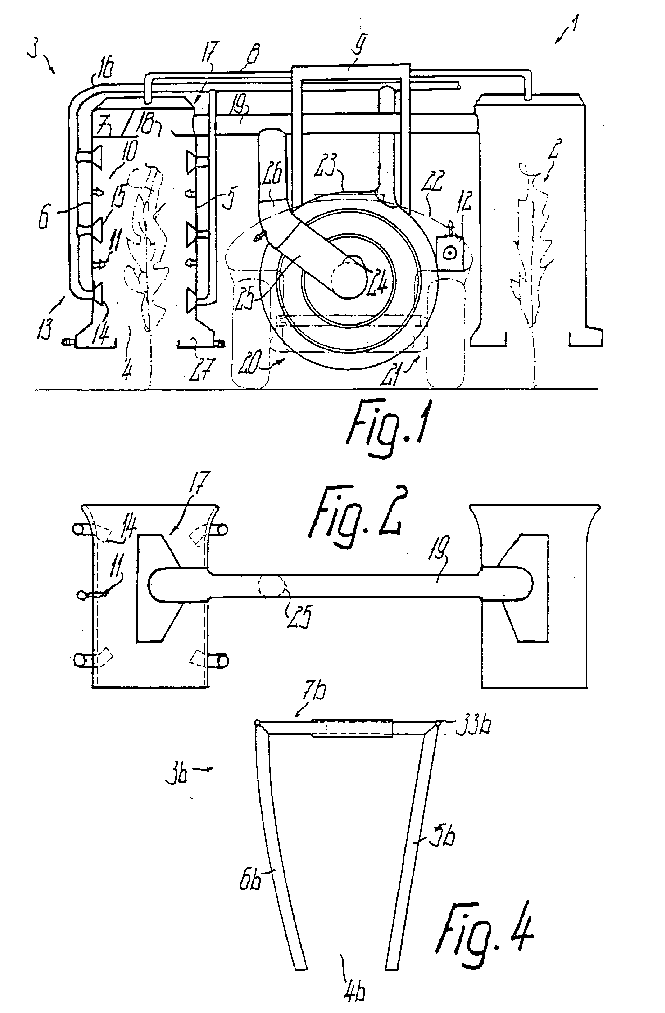

Die in den Figuren 1 und 2 dargestellte Austragvorrichtung 1 dient z.B. zum Behandeln von Reihenkulturen, deren Pflanzen 2 in zueinander parallelen und im Abstand zueinander stehenden Reihen derart gesetzt sind, daß zwischen benachbarten Reihen hindurchgefahren werden kann. Für beide dieser benachbarten Reihen weist die Austragvorrichtung 1 jeweils eine Austrageinheit 3 auf, wobei die beiden Austrageinheiten 3 im wesentlichen gleich ausgebildet und spiegelsymmetrisch zueinander angeordnet sein können.

Jede Austrageinheit 3 bildet einen, bezogen auf die zu den Reihen parallele Fahr- bzw. Laufrichtung Pfeil 34, vorne und hinten offenen, kabinenartigen Durchlaß bzw. eine Behandlungszone 4, die auch an der Unterseite offen, also im wesentlichen U-förmig durch seitliche Begrenzungen bzw. Wandungen 5, 6 und eine obere Wandung 7 begrenzt ist. Der dadurch gebildete Kabinenkörper ist am Ende eines im wesentlichen nur an seiner Oberseite angreifenden Auslegers 8 eines Traggestelles 9 angelenkt, das zwischen den Pflanzenreihen liegt und an einem geeigneten Transportmittel zu befestigen ist. Mit dem Ausleger 8 kann jede Austrageinheit 3 gesondert querverstellt und so auf den Reihenabstand eingestellt werden.

Die Austrageinheit 3 weist eine Austrageinrichtung 10 für Stäubemittel oder Behandlungsbrühe auf, die im wesentlichen durch Austragdüsen 11 an den Innenseiten der seitlichen Wandungen 5, 6 gebildet sind. Jeweils mehrere Austragdüsen 11 befinden sich übereinander etwa in der Mitte der Länge des Durchlasses 4 bzw. des Kabinenkörpers und sind auf die gegenüberliegende seitliche Wandung gerichtet. Die Austragdüsen 11 sind über geeignete, flexible und oben über die Austrageinheiten 3 geführte Druckleitungen an die Druckseite einer Flüssigkeits-Druckpumpe 12 angeschlossen, wobei sowohl die Austrageinrichtung 10 jeder Austrageinheit 3 unabhängig von der anderen Austrageinheit stillgesetzt bzw. abgesperrt werden kann als auch jede Austragdüse 11 gesondert zu schließen ist. Die Austragdüsen 11 sind annähernd über die gesamte Höhe des Durchlasses 4 gleichmäßig verteilt.

Jeder Austrageinheit 3 ist des weiteren eine gesondert stillzusetzende bzw. absperrbare Drucklufteinrichtung 13 zugeordnet, die im Bereich jedes Endes des Durchlasses 4 an den Innenseiten beider seitlichen Wandungen 5, 6 im wesentlichen gleichmäßig verteilt übereinander liegende Luftdüsen 14, 15, beispielsweise in Höhenrichtung sich erstreckende Breitmauldüsen, aufweist. Diese Luftdüsen sind außerhalb des Durchlasses bzw. des Kabinenkörpers an Druckluft-Zuleitungen 16 angeschlossen. Die Luftdüsen 14, 15 können sowohl jeweils zur Bildung eines Luftvorhanges am zugehörigen Ende des Durchlasses 4 als auch zur Erzeugung eines Wirbelluftstromes dienen, in dessen etwa in der Mitte der Länge des Durchlasses 4 liegenden und sich über dessen gesamte Höhe erstreckenden Zentrums die Austrageinrichtung 10 das Behandlungsmittel einspritzt. Für den Luftvorhang und den Wirbelluftstrom können aber auch gesonderte Luftdüsen vorgesehen sein, wobei z.B. die Luftdüsen für den Wirbelluftstrom im Bereich der Austragdüsen 11 bzw. näher bei der Mitte der Länge des Durchlasses 4 als die Luftdüsen für den jeweiligen Luftvorhang liegen. Auch die Unterseite des Durchlasses 4 kann von einem Luftvorhang begrenzt sein, wobei zweckmäßig beiderseits der offenen Unterseite des Kabinenkörpers über dessen Länge verteilte, gegeneinander gerichtete Luftdüsen vorgesehen sind, die vorzugsweise unter einem Winkel von höchstens 45° schräg nach oben gerichtet sind.

Des weiteren ist jeder Austrageinheit 3 eine gesondert stillzusetzende bzw. absperrbare Rücksaugeinrichtung 17 zugeordnet, welche zur Rücksaugung der im Durchlaß 4 im Luftstrom der Drucklufteinrichtung 13 schwebenden Nebel des Behandlungsmediums dient. Im dargestellten Ausführungsbeispiel weist die Rücksaugeinrichtung 17 in der oberen Wandung 7 des Durchlasses 4 eine sich über den größten Teil von dessen Länge bzw. zwischen den Luftvorhängen erstreckende Absaugöffnung 18 auf, die über eine seitlich an die innere seitliche Wandung 5 anschließende Saugleitung 19 an ein Gebläse 20 angeschlossen ist.

Das Gebläse 20 kann z.B. mit der Austragvorrichtung 1 bzw. deren Traggestell 9 integriert sein, so daß es mit der gesamten Austragvorrichtung 1 von einem Fahrgestell, beispielsweise einem Schlepper oder einem Anhänger abgenommen werden kann. Im dargestellten Ausführungsbeispiel ist das Gebläse 20 am Fahrgestell 21 eines einachsigen Anhängers, und zwar an dessen hinterem Ende mit horizontaler bzw. zur Fahrrichtung paralleler Rotorachse, und zwar hinter einem Behälter 22 angeordnet, den das Fahrgestell 21 trägt und der zum Mitführen eines größeren Vorrates an Behandlungsmedium mit der Austragvorrichtung 1 dient. Das Gebläse 20 wird z.B. ebenso wie die Druckpumpe 12 über die an Schleppern üblicherweise vorgesehene Zapfwelle angetrieben. Es ist aber auch denkbar, das Gebläse 20 hydraulisch anzutreiben, wobei als Antriebsflüssigkeit auch das von der Druckpumpe 12 geförderte Behandlungsmedium oder eine dieser Druckpumpe 12 zugeordnete bzw. mit dieser integrierte Hydraulikpumpe dienen kann. Im dargestellten Ausführungsbeispiel ist das üblicherweise an Sprühgeräten vorgesehene Gebläse 20, dessen Gehäuse zur Axialansaugung offen und am Umfang mit radialen Luftaustritten versehen ist, am Umfang mit einer Umfangs- bzw. Radialverkapselung 23 versehen, von welcher eine Abzweigleitung zur Druckluft-Zuleitung 16 führt. Die an der rückwärtigen Stirnfläche liegende Saugseite des Gebläses 20 ist ebenfalls im wesentlichen verschlossen und mit einem Sauganschluß 24 versehen, an welchen ein zur Saugleitung 19 führender Saugkanal 25 angeschlossen ist.

Um die von der Rücksaugeinrichtung 17 im Luftstrom abgesaugten Anteile des Behandlungsmediums abscheiden und ggf. dem Behälter 22 wieder zuführen zu können, ist an die Rücksaugeinrichtung 17 ein Abscheider 26 vorzugsweise an den Saugkanal 25 angeschlossen, wobei dieser Abscheider 26 einen an den Behälter 22 angeschlossenen Ablauf aufweisen kann.

Die Innenseiten der Wandungen 5, 6, 7 sind zweckmäßig mit Lamellen, Siebgeweben, Netzen o.dgl. unabhängig davon versehen, ob sie Absaugöffnungen aufweisen oder nicht, damit das auf sie aufprallende Behandlungsmittel nicht dazu neigt, reflektionsartig zurückzuspritzen, sondern zunächst absorbiert bzw. gebunden wird. Insbesondere dann, wenn sich diese Absorptionsmittel nicht im Bereich einer Absaugöffnung der Rücksaugeinrichtung 17 befinden, wird das Behandlungsmedium bei Sättigung dieser Absorptionsmittel dazu neigen, nach unten abzufließen. Zum Auffangen von nach unten entlang der Wandungen 5, 6, 7 abfließenden Behandlungsmediums sind im unteren Bereich des Durchlasses 4 bzw. an den Unterseiten der seitlichen Wandungen 5, 6 über die gesamte Kabinenlänge sich erstreckende Auffangrinnen 27 mit Leitungsanschlüssen vorgesehen, über welche das aufgefangene Behandlungsmedium durch nicht näher dargestellte Rücklaufleitungen beispielsweise mit der Druckpumpe 12 oder einer Luftstrahlpumpe (Injektor) abgesaugt und zweckmäßig zurück in den Behälter 22 und/oder direkt in die Zuleitung zu den Austragdüsen 11 gefördert wird.

Zweckmäßig sind auch Mittel vorgesehen, um mit jeder Austrageinheit 3 gesondert die zugehörigen Pflanzen 2 lediglich abblasen zu können, beispielsweise zum Zwecke der Entstaubung oder des Entfernens überschüssigen Behandlungsmediums, wobei in diesem Fall die Luftdüsen 14, 15 auf eine gedrosselte Blasleistung eingestellt werden. Die von der Pflanze 2 durch dieses Abblasen entfernten Partikel können mit der Rücksaugeinrichtung 17 gleichzeitig abgesaugt und ggf. in der beschriebenen Weise zurückgeführt werden. Bei einer anderen vorteilhaften Weiterbildung des Erfindungsgegenstandes sind mindestens zwei Düsensysteme von Austragdüsen 11 vorgesehen, die für den Austrag unterschiedlicher Behandlungsmedien ausgebildet sein können. Dadurch können z.B. in unterschiedlichen Höhenzonen unterschiedliche Behandlungsmedien ausgebracht werden, nämlich beispielsweise in der Frucht-Behangzone der Pflanzen 2 ein anderes Spritzmittel als in deren Laubzone.

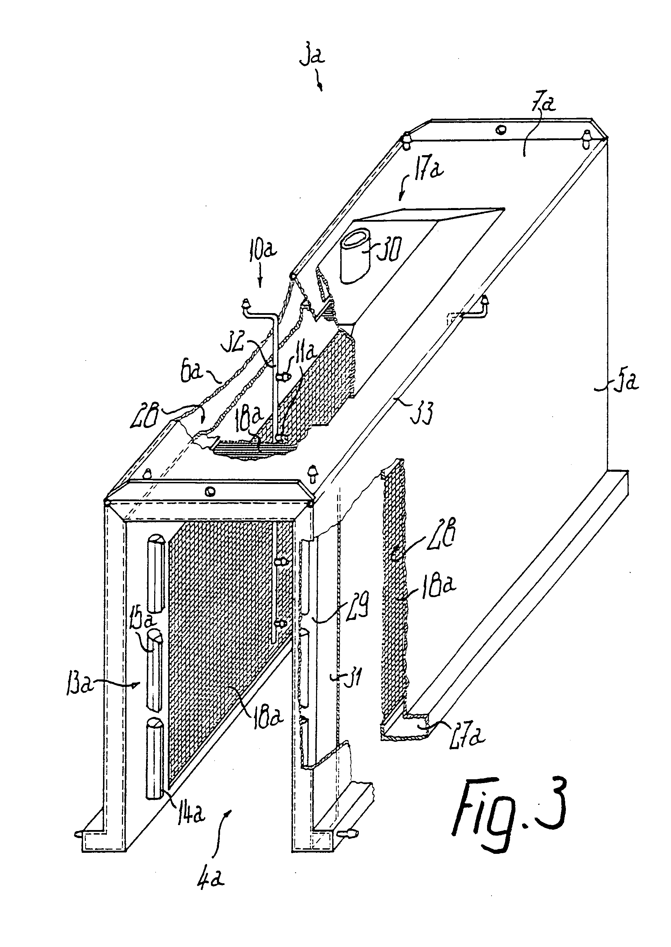

In Fig. 3 sind für einander entsprechende Teile die gleichen Bezugszeichen wie in den Figuren 1 und 2, jedoch mit dem Index "a" verwendet.

Bei der Ausführungsform nach Fig. 3 ist mindestens eine Wandung des Durchlasses 4a als Hohlwandung ausgebildet, wobei zweckmäßig wenigstens die seitlichen Wandungen 5a, 6a und/oder die obere Wandung 7a als Hohlwandungen ausgebildet sind. Diese doppelwandigen Hohlwandungen sind im wesentlichen nach Art eines geschlossenen Kastenprofiles ausgebildet und nur dort zum Durchlaß 4a an der zugehörigen Innenwandung offen, wo eine Absaugöffnung 18a bzw. ggf. eine Luftdüse 14a, 15a oder eine Austragdüse 11a vorgesehen ist. Wie Fig. 3 zeigt, können Absaugöffnungen 18a der Rücksaugeinrichtung 17a auch an einer oder beiden seitlichen Wandungen 5a, 6a des Durchlasses 4a vorgesehen sein, wobei jede Absaugöffnung vollständig von einem der genannten, flüssigkeitsdurchlässigen Absorptionsmittel abgedeckt ist.

Alle als Hohlwandungen ausgebildeten Wandungen 5a, 6a, 7a bilden insgesamt mehrere, nämlich z.B. drei gegeneinander abgedichtete und jeweils über alle Hohlwandungen reichende Kammern 28, 29. Alle Kammern bilden Strömungskanäle etwa gleicher, nämlich der Wandungsdicke entsprechender Dicke, jedoch unterschiedlichen Querschnittes, da sie sich in Längsrichtung des Durchlasses 4a unterschiedlich weit erstrecken. Die mittlere, größte und zwischen beiden seitlichen Wandungen 5a, 6a über die obere Wandung 7a durchgehende Kammer 28 ist zum Durchlaß 4a hin über die Absaugöffnungen 18a offen und an der Oberseite der oberen Wandung 7a an eine Absaughaube angeschlossen, die mit einem Absauganschluß 30 für den Anschluß der Saugleitung versehen ist. An beiden Enden des Kabinenkörpers ist jeweils eine weitere, wesentlich kleinere Kammer 29 vorgesehen, die nur im Bereich der die Luftdüsen 14a, 15a aufweisenden Wandungen 5a, 6a liegen oder ebenso wie die Kammer 28 sich durchgehend über alle Wandungen erstrecken kann. Diese Kammer 29 ist gegenüber der Kammer 28 jeweils durch eine bzw. mehrere geeignete Trennwände 31 abgetrennt, die innerhalb der Hohlwand liegen und deren Versteifung dienen können. Diese, im Gegensatz zur Kammer 28 auch gegenüber der Auffangrinne 27a geschlossenen Kammern 29 sind beispielsweise an der Oberseite des Kabinenkörpers mit geeigneten Anschlüssen für die Druckluft-Zuleitung versehen. Die um aufrechte Längsachsen schwenkbar in die Innenteile der zugehörigen Wandungen 5a, 6a eingelassenen Luftdüsen 14a, 15a sind eingangsseitig unmittelbar an die Kammern 29 angeschlossen, so daß diese einen Bestandteil der Druckluftzuführung bilden.

Die Austragdüsen 11a sind im dargestellten Ausführungsbeispiel übereinander an einem aufrechten Verteilerrohr angeordnet, das unmittelbar vor der jeweils zugehörigen Absaugöffnung 18a liegt und den Kabinenkörper im oberen Bereich nach außen durchsetzt, so daß an das zugehörige Ende dieses Verteilerrohres 32 die Druckleitung für das Behandlungsmedium angeschlossen werden kann. Sämtliche Anschlußleitungen für Behandlungsmedium, Druckluft, Rücksaugung und dgl. sind zweckmäßig vom Kabinenkörper bzw. von der Austrageinheit 3a lösbar, so daß eine einfache Handhabung bei der Montage, in Störfällen, zur Reinigung und zur Wartung gewährleistet ist.

Zur Reinigung des Kabinenkörpers selbst ist dieser zweckmäßig auseinanderklappbar ausgebildet, wofür z.B. die seitlichen Wandungen 5a, 6a im oberen Bereich über scharnierartige Gelenke 33 mit der oberen Wandung 7a verbunden oder die Wandungen 5a, 6a, 7a voneinander lösbar ausgebildet sein können. Durch teilweises Auseinanderklappen der seitlichen Wandungen 5a, 6a ist der Durchlaß 4a auch in seiner Breite verstellbar, obwohl auch eine Breitenverstellbarkeit durch verschiebbare Lagerung der Wandungen denkbar ist. Auch eine Höhenverstellbarkeit des Durchlasses 4a kann zweckmäßig sein, um die Austrageinheit 3a an die jeweiligen räumlichen Verhältnisse der Pflanzen anpassen zu können. Des weiteren ist zweckmäßig eine Verstellbarkeit der Lage der Austrageinheit 3a bzw. des Kabinenkörpers gegenüber dem Traggestell insbesondere hinsichtlich der Schräglage der Austrageinheit 3a vorgesehen.

Durch die erfindungsgemäße Ausbildung kann mit ein und derselben Austragvorrichtung in mehreren bzw. zumindest zwei Betriebsweisen gearbeitet werden. Tragen die Pflanzen z.B. noch kein Laub, so ist es erwünscht, daß der Pflanzenstock bis zum Naßzustand behandelt wird, und in diesem Fall ist es zweckmäßig, wenn nur mit den Austragdüsen 11a Spritzmittel im wesentlichen ohne Luftverwirbelung ausgetragen und dabei der Durchlaß 4a an seinen ansonsten unbegrenzten Seiten mit Luftvorhängen abgeschirmt wird. Haben die Pflanzen bereits einen Laubbesatz, so wird zweckmäßig das Behandlungsmedium in der beschriebenen Weise ausgesprüht und durch Luftverwirbelung über die Pflanze verteilt.

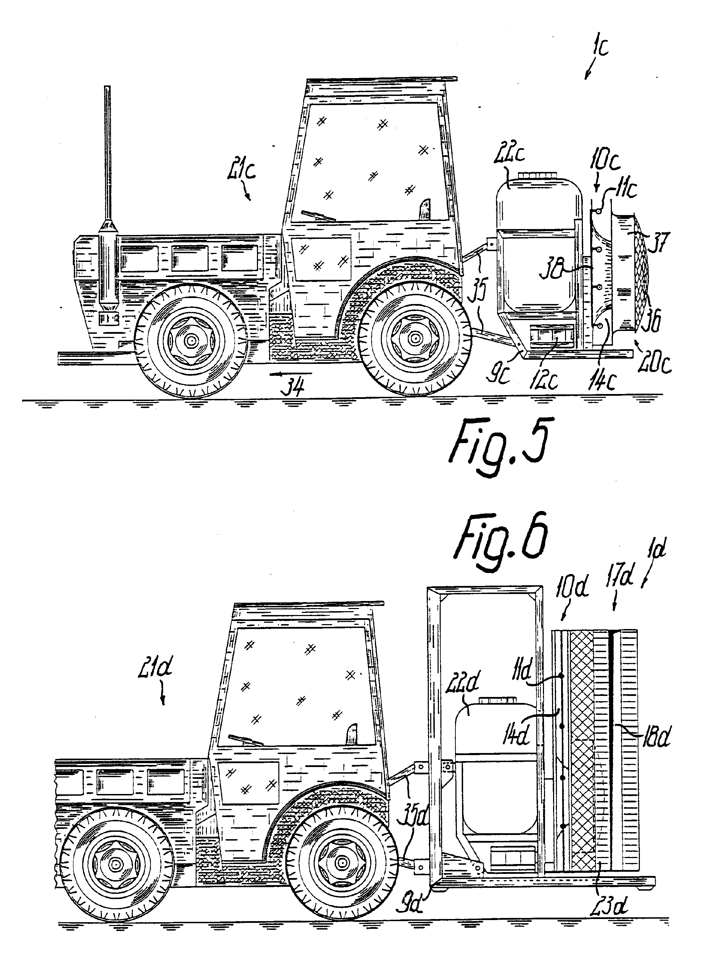

Zur Anpassung des Durchlasses 4b an die Pflanzenform kann dieser Durchlaß 4b gemäß Fig. 4 auch von oben nach unten im wesentlichen stetig oder progressiv verengt sein, wobei die seitlichen Wandungen 5b, 6b eben und nach unten konvergierend ausgebildet sein können. Eine oder beide Wandungen können aber auch, in Fahrrichtung gesehen, leicht gekrümmt sein, wodurch sie eine wesentlich höhere Formsteifigkeit erhalten. Gemäß Fig. 4 ist die obere Wandung 7b und dadurch auch der Durchlaß 4b breitenverstellbar, wobei durch die Gelenke 3b zusätzlich die Verengung des Durchlasses 4b geändert bzw. sogar derart umgekehrt werden kann, daß der Durchlaß 4b nach unten weiter wird. In der jeweiligen Klapplage sind die seitlichen Wandungen 5b, 6b zweckmäßig durch eine nicht näher dargestellte Arretiereinrichtung, vorzugsweise stufenlos, feststellbar.

Die Austragvorrichtung 1c gemäß Fig. 5 ist unmittelbar am Fahrgestell eines Motorfahrzeuges 21c und zwar an den drei über dessen Rückseite vorstehenden Lenkern von dessen Dreipunkt-Gestänge 35 befestigt bzw. aufgesattelt, wobei diese Lenker am Motorfahrzeug 21c um zur Laufebene parallele Achsen durch angetriebenes Schwenken einstellbar sind. Zwei untere, im Abstand nebeneinander liegende Lenker stehen von einer gemeinsamen Schwenkachse nach hinten ab und darüber ist in der Mitte zwischen diesen beiden Lenkern der dritte Lenker vorgesehen. Durch gemeinsames oder gesondertes Schwenken bzw. Heben und Senken der unteren Lenker und des oberen Lenkers kann das an diesen angeordnete Traggestell 9c sowohl in Höhe verstellt als auch um eine gedachte, zur Laufrichtung Pfeil 34 etwa rechtwinklige sowie zur Laufebene annähernd parallele Achse in unterschiedliche Kipplagen geschwenkt werden. Das aus Rahmenzargen zusammengesetzte Traggestell 9c trägt benachbart zum Gestänge 35 einen Speicher-Behälter 22c und darunter die Druckpumpe 12c, wobei hinter diesen beiden Teilen die Austrageinrichtung 10c mit zur Laufrichtung Pfeil 34 etwa paralleler Gebläseachse angeordnet ist. Der Speicher-Behälter kann auch in besonders vorteilhafter Weise auf einem vom Motorfahrzeug geschleppten Anhänger angeordnet sein, so daß ein großes Volumen mitgeführt werden kann und trotzdem die auf das Motorfahrzeug wirkende Gewichtslast gering bleibt. Das Motorfahrzeug trägt so im wesentlichen nur mindestens eine Austrageinheit und bleibt gut lenkbar. Das Gebläse 20c weist einen im wesentlichen zylindrischen, den nicht näher dargestellten Gebläserotor relativ eng umgebenden Gebläsemantel 37 auf, der mit einem an sein eines Ende anschließenden, trichterartigen Umlenkkörper die ringförmig sich im wesentlichen über den gesamten Außenumfang erstreckende Drucköffnung 14c begrenzt und am anderen, hinteren Ende mit seiner offenen, ggf. durch ein Schutzgitter abgedeckten Stirnseite die axiale Ansaugöffnung des Gebläses bildet. In der Drucköffnung 14c, die unmittelbar die ringförmige Luftdüse der Austragvorrichtung 1c bildet, liegen über den Umfang verteilte, radial nach außen gerichtete Austragdüsen 11c für das Behandlungsmedium, die über die Druckpumpe 12c an den Behälter 22c angeschlossen sind. Dadurch kann ein fächerförmig etwa rechtwinklig zur Laufrichtung Pfeil 34 liegender, zerstäubtes Behandlungsmedium enthaltender, Behandlungsstrom ausgebracht werden.

Bei der Ausbildung gemäß Fig. 6 ist das Traggestell 9c gemäß Fig. 5 in einem größeren, an dem Gestänge 35d leicht auswechselbar anzuordnenden, rahmenartigen Traggestell 9d angeordnet und unmittelbar hinter diesem Traggestell 9d ist das Gebläse von einem Luft-Leitgehäuse 23d umgeben. Dieses Leitgehäuse bildet an einer oder beiden seitlichen, aufrechten Außenseiten jeweils eine annähernd vertikal bzw. geradlinig langgestreckte Luftdüse 14d mit in dieser liegenden Austragdüsen 11d, wobei diese Luftdüse 14d unmittelbar im Bereich der Drucköffnung des Gebläses vorgesehen und daher auf direktem Weg von dieser versorgt ist. Unmittelbar hinter der Luftdüse 14c weist das Leitgehäuse eine ebenfalls langgestreckte, aufrechte bzw. im wesentlichen gleich wie die Luftdüse 14d dimensionierte Rücksaugöffnung 18d auf, welche im Bereich der Ansaugöffnung des Gebläses liegt, so daß dieses nur durch die Rücksaugöffnung bzw. die Rücksaugöffnungen 18d ansaugen kann. Dadurch wird seitlich im Bereich der Austragvorrichtung 1d eine auch im Bereich der Behandlungszone wirkende Saugströmung erzeugt, so daß solches Behandlungsmedium, das sich nicht abgelagert hat, zurück in das Gebläse angesaugt und sofort wieder durch die Luftdüse 14d ausgetragen wird.

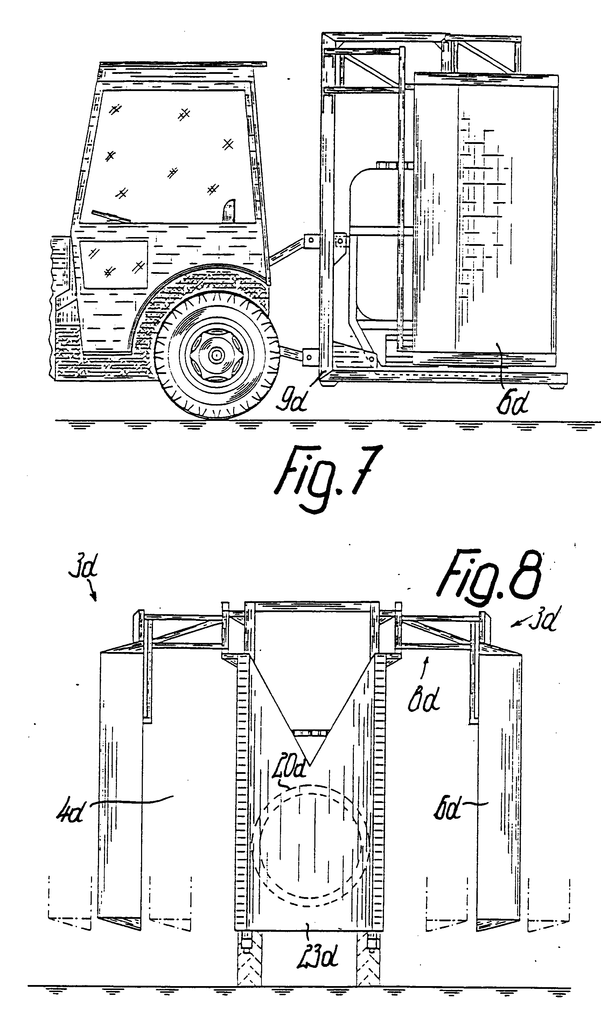

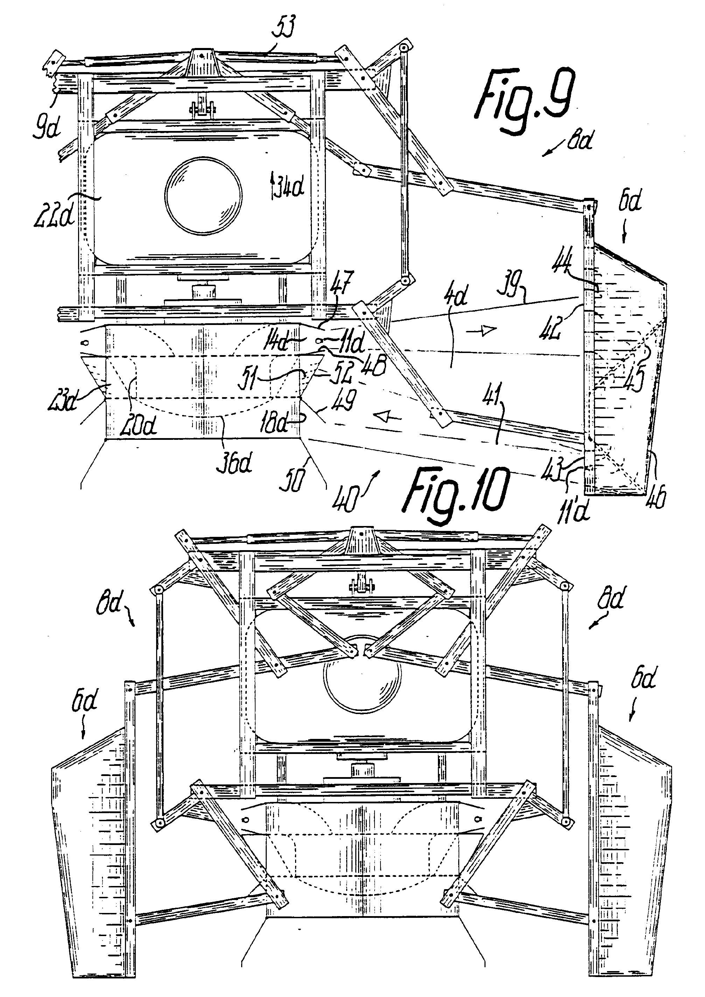

Wie die Figuren 7 bis 11 ferner zeigen, kann an dem Traggestell 9d seitlich auf jeder Seite ein Ausleger 8d in Form beispielsweise eines Koppelgelenk-Schwenkauslegers angelenkt werden, der an seinem Auslegerende jeweils eine wannenförmige Wandung 6d frei hängend so trägt, daß dem Luftleitgehäuse 23d im Abstand gegenüberliegend die Behandlungszone 4d begrenzt ist. Diese Begrenzung erstreckt sich in Laufrichtung Pfeil 34d über eine größere Länge als die innere, gebläseseitige Begrenzung, wie sie z.B. durch den Abstand zwischen den voneinander abgekehrten vorderen und hinteren Seiten der Luftdüse 14d und des Rücksaugeinganges 18d definiert ist. Dadurch steht die Wandung 6d nach vorne und/oder hinten über die innere, gebläseseitige Begrenzung vor.

Der Luftdüse 14d, die praktisch einen schlitzförmigen, zur Gebläseachse rechtwinkligen bzw. tangentialen und zur Laufebene etwa rechtwinkligen Gebläseausgang bildet, liegt auf der anderen Seite der Behandlungszone 4d ein Umleiteingang 42 gegenüber, der durch den größeren, vorderen Teil der Wannenöffnung der Wandung 6d gebildet ist. In geringem Abstand hinter diesem Umleiteingang 42 bildet die Wannenöffnung mit ihrem hinteren Teil einen kleineren Umlenkausgang 43, der gegen den annähernd parallel und ebenengleich zum Gebläseausgang 14d liegenden Rücksaugeingang 18d gerichtet ist. Der jeweilige Eingang ist zweckmäßig in Laufrichtung Pfeil 34d breiter als der zugehörige gegenüberliegende Ausgang. Im Umleiteingang 42 ist zweckmäßig ein Strömungs-Leitwerk 44 in Form beispielsweise eines Lamellensatzes angeordnet, dessen zur Laufebene annähernd rechtwinklige Lamellen in Draufsicht so gekrümmt sind, daß die Strömung in Richtung zum Umlenkausgang 43 in die Wandung 6d geleitet wird. Entsprechende Leitwerke 45 können auch innerhalb der Wandung 6d vorgesehen sein. Jedes Leitwerk 44 bzw. 45 kann des weiteren eine Abscheideeinrichtung bilden, durch welche der größte Teil der im Trägerluftstrom befindlichen Tropfen des Behandlungsmediums ausgeschieden wird. Das nicht von den Pflanzen aufgenommene und dann abgeschiedene Behandlungsmedium wird zweckmäßig auf einer unteren Begrenzung der Wandung 6d und/oder in einer Auffangrinne gemäß den Figuren 1 und 3 gesammelt und zurückgeführt. Die aufrechte Bodenwand 46 der Wandung 6d ist so gekrümmt bzw. abgewinkelt, daß sie ebenfalls zur Strömungsleitung beiträgt.

Durch die beschriebene Ausbildung ergibt sich eine Umleit-Einrichtung 40 für den Behandlungsstrom derart, daß dieser die Behandlungszone 4d aufeinanderfolgend auf zwei Strömungsbahnen 39, 41 durchströmt. Die primäre, der vorderen Strömungsbahn 39 zugehörige Strömung geht vom Gebläseausgang 14d zum Umleiteingang 42, wonach sie entgegen Laufrichtung Pfeil 34d um etwa 180° umgelenkt und als sekundäre Strömung auf der im Abstand dahinterliegenden Strömungsbahn 41 vom Umlenkausgang 43 zum Rücksaugeingang 18d geführt wird. Im Bereich bzw. innerhalb des Umlenkausganges 43 können weitere Austragdüsen 11′d vorgesehen sein, welche im wesentlichen parallel zur sekundären Strömung ausgerichtet sind und dieser erneut zersprühtes bzw. zerstäubtes Behandlungsmedium zuführen.

Mindestens eine Luftdüse bzw. der Gebläseausgang 14d ist von klappenförmigen Strömungs-Richtkörpern 47, 48 begrenzt, wobei je eine Klappe an jeder Längsseite des Gebläseausganges 14d angeordnet und um ein annähernd vertikales Gelenk schwenkbar ist, von welchem die Klappe in Strömungsrichtung absteht. Zwischen diesen Klappen bzw. Richtkörpern 47, 48 können die zugehörigen Austragdüsen 11d angeordnet sein. In der Abstandslücke zwischen dem Gebläseausgang 14d und dem Rücksaugeingang 18d kann ein weiterer Rücksaugeingang 52 bzw. ein Teil des Rücksaugeinganges liegen, der zur trichterartigen Begrenzung in Draufsicht schräg liegt und zweckmäßig ebenfalls mit einem Leitwerk 51 versehen ist, durch dessen Lamellen Behandlungsmedium aus dem Sekundärstrom abgeschieden werden kann. Dieses Behandlungsmedium wird zweckmäßig auf einer unteren, Gefälle aufweisenden Bodenwandung des Leitgehäuses 23d gesammelt und in der beschriebenen Weise zurückgeführt. Der Rücksaugeingang 18d ist ähnlich wie der Gebläseausgang 14d von schwenkbaren Richtkörpern 49 bzw. Klappen 50 begrenzt, wobei der vordere Richtkörper 49 zwischen den beiden Rücksaugeingängen 18d, 52 liegt.

Das im wesentlichen vor dem Gebläse 20d liegende Gestänge des jeweiligen Auslegers 8d ist jeweils so ausgebildet und angeordnet, daß es in Draufsicht die zugehörige Wandung 6d zwischen einer äußersten Stellung gemäß Fig. 9 und einer innersten Stellung gemäß Fig. 10 im wesentlichen so parallel verschieben kann, daß keine Verlagerung der Wandung 6d gegenüber der inneren, gebläseseitigen Begrenzung in oder entgegen Laufrichtung Pfeil 34d erfolgt. Zur Bewegung des Gestänges ist jeweils ein Antrieb 53 in Form beispielsweise eines Hydraulikzylinders vorgesehen. In der äußersten Stellung der Wandung 6d hat die Behandlungszone 4d die größte Breite und in der innersten Stellung gemäß Fig. 10 die kleinste Breite. Das Gestänge ist des weiteren so ausgebildet, daß es die Wandung 6d aus der Stellung gemäß Fig. 10 durch Parallelverschiebung in eine Lage gemäß Fig. 11 noch weiter nach innen bewegen kann. In dieser Nichtgebrauchslage liegt die Wandung 6d unmittelbar seitlich am Traggestell 9d und in Laufrichtung Pfeil 34d gegenüber dem Gebläseausgang 14d bzw. dem Rücksaugeingang 18d und damit gegenüber dem Gebläse 20d nach vorne versetzt, so daß dann mit der Austragvorrichtung 1d entsprechend der Ausbildung bzw. Ausrüstung nach Fig. 6 gearbeitet werden kann. In Fig. 11 ist die Austragvorrichtung 1d auf der rechten Seite im Schnitt unterhalb des Auslegers 8d dargestellt. Zur Überführung der Wandung 6d in die Lage gemäß Fig. 11 ist jedem Ausleger 8d ein weiterer Antrieb 54 in Form beispielsweise eines Hydraulikzylinders zugeordnet. Die beiden Wandungen 6d können sowohl gemäß den Figuren 9 und 10 als auch gemäß Fig. 11 unabhängig voneinander lageverändert werden, so daß auf beiden Seiten der Austragvorrichtung 1d in unterschiedlichen Verfahren gearbeitet werden kann. Dadurch, daß nicht die inneren Luftdüsen bzw. Begrenzungen der Behandlungszone, sondern nur deren äußere Begrenzungen zur Breitenverstellung stufenlos lageveränderbar sind, ist eine sehr genaue Anpassung an die jeweilige Pflanzenreihe so möglich, daß mit der Austragvorrichtung trotzdem in der Mitte zwischen zwei benachbarten Pflanzenreihen gefahren werden kann. Bei Verwendung der Wandungen 6d bilden diese sowohl Strömungs- bzw. Umlenk- als auch Absorptionskabinen für den Behandlungsstrom.

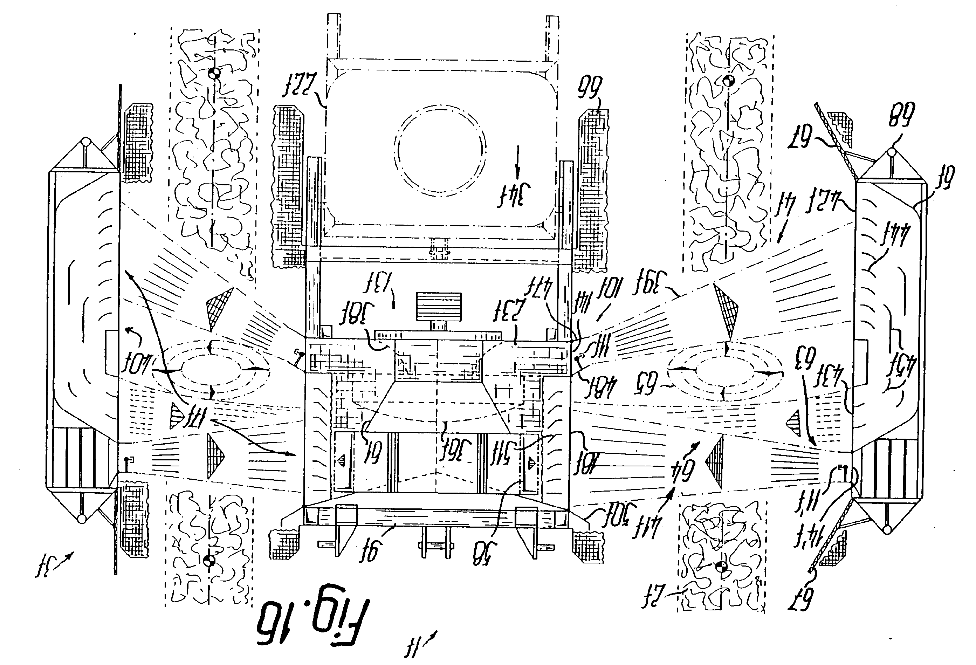

Wie Fig. 12 zeigt, können die radial bzw. tangential liegenden Rücksaugeingänge 18d, 52 unabhängig voneinander mit geeigneten Schließelementen geschlossen werden, wobei diese Schließelemente zweckmäßig durch die Richtkörper 49 bzw. Klappen 50 gebildet sind. Der klappenförmige Richtkörper 49 läßt sich so weit nach vorne schwenken, daß er im wesentlichen den Rücksaugeingang 52 verschließt, während die Klappe 50 so weit nach vorne zu schwenken ist, daß sie den Rücksaugeingang 18d verschließt. Auch die Klappen 47, 48 können wenigstens auf einem Teil ihrer Länge so eng einander angenähert werden, daß sie den Gebläseausgang 14d praktisch verschließen. Mindestens eine der genannten Klappen, insbesondere diejenigen der Rücksaugeingänge sind zweckmäßig in ihrer Längsrichtung in mehrere, zum Beispiel mindestens drei aneinander anschließende Einzelklappen unterteilt, die gesondert geschwenkt werden können. Dadurch lassen sich Teilabschnitte der jeweils zugehörigen Öffnung teilweise oder vollständig schließen, während andere Teilabschnitte weiter geöffnet bleiben, so daß die Strömung des Behandlungsstromes über dessen Höhe unterschiedlich eingestellt und so der Behandlungsstrom an den Wuchs der jeweiligen Pflanzen angepaßt werden kann. Die zur Gebläse-Ansaugöffnung 36d benachbarte Stirnwand des Leitgehäuses 23d kann ebenfalls mit Schließelementen 55 geschlossen oder mehr oder weniger geöffnet werden. Die z.B. durch eine Anzahl von Klappen gebildeten Schließelemente 55 ermöglichen eine direkte axiale Ansaugung des Gebläses 20d unter Umgehung der radialen Gehäuseöffnungen, wobei der Ansaugquerschnitt verändert werden kann. Dadurch kann, ähnlich wie bei der Ausbildung nach Fig. 5 axial angesaugt und radial ausgeblasen werden. Bei erfindungsgemäßem Einsatz sind jedoch die Schließelemente 55 meist vollständig geschlossen. Im übrigen sind in den Figuren 1 bis 16 für einander entsprechende Teile die gleichen Bezugszeichen, jedoch je nach Ausführungsform mit unterschiedlichen Bezugszeichen verwendet, weshalb die entsprechenden Beschreibungsteile für alle Figuren gelten.

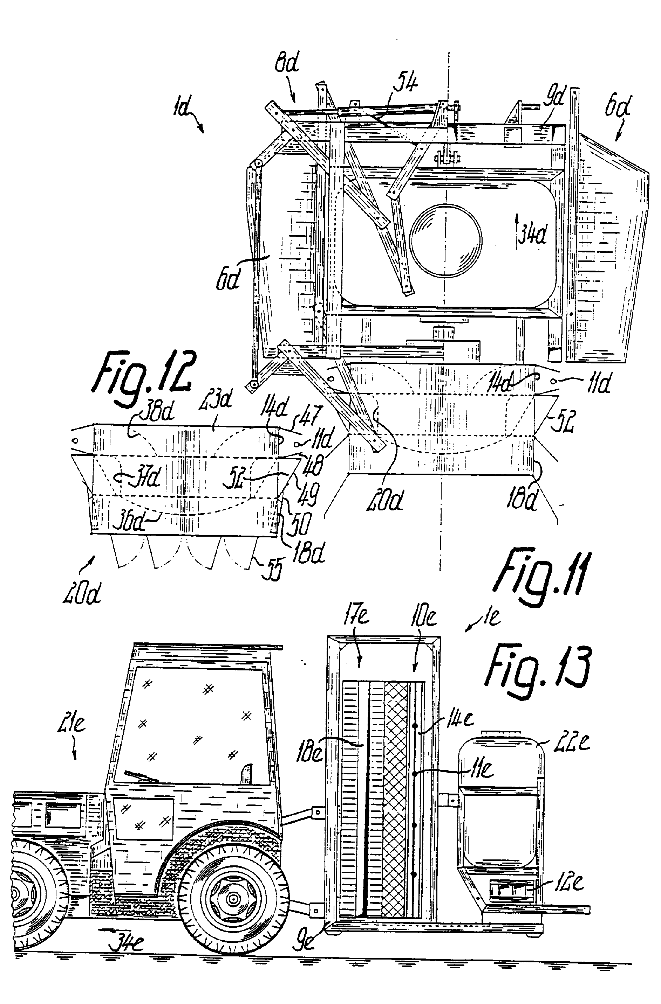

Bei der Ausführungsform nach Fig. 13 ist der Speicher-Behälter 22e hinter dem Gebläse bzw. den Luftdüsen 14e auf dem Traggestell 9e angeordnet. Der bzw. ein Behälter kann dabei aber auch auf einem Anhänger gemäß Fig. 1 angeordnet sein; dasselbe gilt für die Druckpumpe 12. Die Bauart bzw. Anordnung des Gebläses kann auch so gewählt sein, daß die Rücksaugöffnungen 18e in Laufrichtung Pfeil 34e vor den Luftdüsen 14e liegen, so daß also der Behandlungsstrom im Falle der Verwendung gegenüberliegender Umleit-Einrichtungen von der primären Strömungsbahn in Laufrichtung zur sekundären Strömungsbahn umgelenkt wird. Die äußeren Begrenzungen sind zweckmäßig entsprechend den Figuren 7 bis 11 ausgebildet, wobei jedoch dann der jeweilige Umleiteingang hinter dem zugehörigen Umlenkausgang liegt.

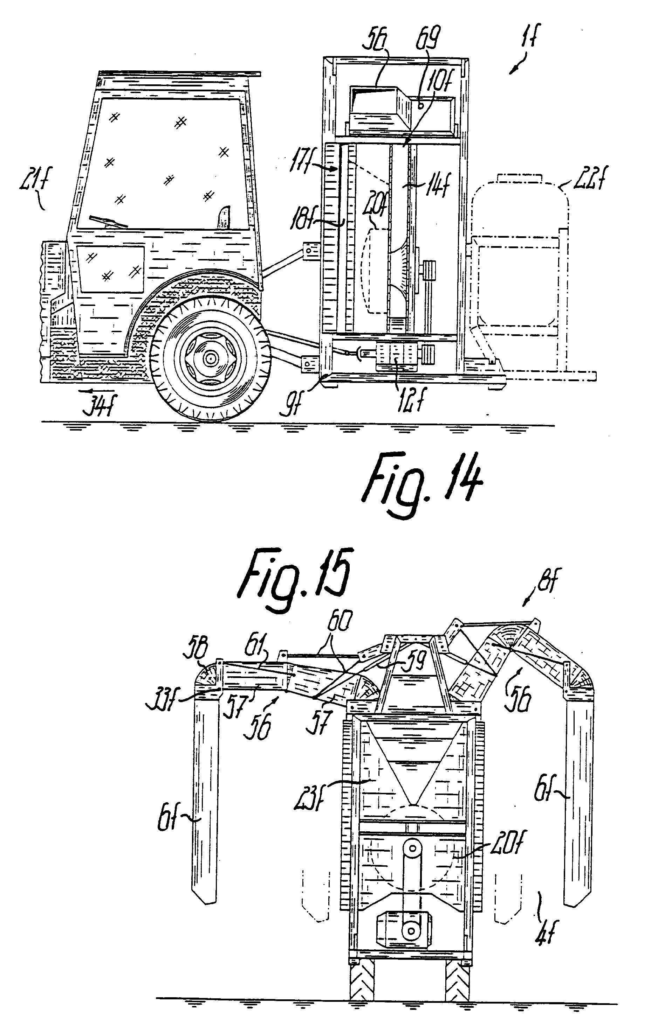

Eine ähnliche Ausbildung mit hintenliegender Austrageinrichtung 10f und vorneliegendender Rücksaugeinrichtung 17f ist auch bei der Ausführungsform nach den Figuren 14 bis 16 vorgesehen. Mindestens ein Ausleger 8f weist in diesem Fall einen Kanalausleger 56 auf, wobei der Ausleger im wesentlichen vollständig durch den Kanalausleger 56 gebildet sein kann, so daß ein gesondertes Auslegergestänge nicht unbedingt erforderlich ist. Jeder Kanalausleger 56 besteht aus mehreren, insbesondere nur zwei aneinanderschließenden, vorteilhaft im Querschnitt rechteckigen Kanalabschnitten 57, die um zur Laufebene bzw. Laufrichtung etwa parallele Achsen gelenkig aneinander sowie einerseits am Traggestell 9f bzw. am Leitgehäuse 23f und andererseits an der zugehörigen Wandung 6f angelenkt sind. Die Gelenkachsen liegen zweckmäßig im Bereich der Unterseiten der Kanalabschnitte, so daß jeder Kanalausleger 56 aus seiner etwa horizontal gestreckten Lage nach oben winkelförmig vorstehend abgewinkelt werden kann und dadurch die Breite der Behandlungszone 4f zu verstellen ist. Außerdem ist jede Wandung 6f am zugehörigen Kanalabschnitt 57 um das Gelenk 33f schwenkbar angelenkt. Zwischen benachbarten Kanalabschnitten 57 sowie für deren Verbindung mit dem Leitgehäuse 23f und der Wandung 6f sind flexible, ebenfalls Kanalabschnitte bildende Gelenkstücke 58 zur Abdichtung in jeder Schwenklage vorgesehen. Zum kniehebelartigen Schwenken des jeweiligen Kanalauslegers 56 greift an dessen inneren Kanalabschnitt 57 ein Antrieb in Form beispielsweise eines Hydraulikzylinders an, wobei jeweils beide Kanalabschnitte 57 mit dem Traggestell 9f so über Steuergestänge 60 verbunden sind, daß beim Schwenken des inneren Kanalabschnittes 57 der äußere Kanalabschnitt 57 ebenfalls um einen etwa gleichen Schwenkwinkel in entgegengesetzter Schwenkrichtung geschwenkt wird. Das obere Ende der jeweiligen Wandung 6f ist an einem Tragrahmen befestigt, der mit einem Antrieb 61 in Form eines Hydraulikzylinders o.dgl. um das Gelenk 33f schwenkbar ist, so daß die Wandung 6f sowohl vertikal als auch nach innen oder außen schräg geneigt eingestellt werden kann. Der Antrieb 61 ist so nach Art eines Steuergestänges mit dem zugehörigen inneren Kanalabschnitt 57 verbunden, daß beim Schwenken der Kanalabschnitte 57 gegeneinander die Wandung 6f ihre Lage gegenüber einer quer zu ihr gedachten Bezugsebene beibehält.

Im dargestellten Ausführungsbeispiel sind die Kanalausleger 56 eingangsseitig an die Druckseite bzw. Drucköffnung des Gebläses 20f angeschlossen, wofür das Leitgehäuse 23f einen geeigneten, im wesentlichen an seiner Oberseite liegenden Leitkanal 61 bildet. Es ist aber auch denkbar, die Kanalausleger für den Absauganschluß 30 gemäß Fig. 3 vorzusehen bzw. an die Saugseite des Gebläses 20f anzuschließen. Des weiteren können sowohl an die Saugseite als auch an die Druckseite angeschlossene Kanalausleger für die jeweilige Behandlungszone vorgesehen sein. Im dargestellten Ausführungsbeispiel weist die jeweilige Wandung 6f an der vom Umleiteingang 42f abgekehrten Seite des Umlenkausganges 43f einen im wesentlichen über dessen Länge reichenden und zu diesem unmittelbar benachbart parallelen Gebläseausgang 14′f auf, der im wesentlichen gleich wie der Umlenkausgang 43f gegen den zugehörigen Rücksaugeingang 18f gerichtet ist. Die Breite des an den zugehörigen Kanalausleger 56 angeschlossenen Gebläseausganges 14′f ist kleiner als die des Umlenkausganges 43f, während der Rücksaugeingang 18f wesentlich breiter als der benachbarte Gebläseausgang 14f ist. Der Gebläseausgang 14′f, in dem Austragdüsen 11′f für das Behandlungsmedium liegen können, ist so gerichtet, daß er sich, in Draufsicht gesehen, in der Behandlungszone 4f mit der aus dem Umlenkausgang 43f austretenden Strömung überschneidet, so daß eine injektorartig wirkende Beschleunigungs-Einrichtung 63 für die sekundäre Strömungsbahn 41f gebildet ist. Die beiden Strömungsbahnen 39f, 41f liegen in Laufrichtung Pfeil 34f in einem solchen Abstand zueinander, daß eine Einrichtung 64 zur Erzeugung einer bei 65 angedeuteten Wirbelwalze zwischen den beiden Strömungsbahnen 39f, 41f gebildet ist, wobei diese Wirbelwalze 65 mit der Austragvorrichtung 1f in Laufrichtung entlang der Reihe von Pflanzen 2f mitwandert. Die Austragdüsen 11f bzw. 11′f sind jeweils an einem Richtkörper 48f bzw. einer der beiden Klappen des zugehörigen Gebläseausganges 14f bzw. 14′f angeordnet, so daß sie bei deren Verschwenken ebenfalls gleichsinnig geschwenkt und so in ihrer Ausrichtung selbsttätig angepaßt werden.

Zur Abschirmung des Behandlungsstromes gegen Abdrift an der Oberseite der Behandlungszone 4f ist unmittelbar an der Unterseite des jeweiligen Kanalauslegers 56 eine entsprechend deren Gelenkigkeit nachgiebige, im wesentlichen geschlossene Deckwand 66 vorgesehen, die in einfacher Weise durch eine flexible Plane, eine im Bereich des Kanalausleger-Gelenks mit einem Scharnier versehene Platte o.dgl. gebildet sein kann. Entsprechende Abschirmungen 67 sind auch am vorderen, einlaßseitigen und am hinteren, auslaßseitigen Ende der Behandlungszone 4f vorgesehen, wobei jede Abschirmung an der zugehörigen Wandung 6f von einem zur Laufebene etwa rechtwinkligen Gelenk so absteht, daß sie aus einer zur Laufrichtung etwa parallelen Lage mehr oder weniger weit in Richtung zur Pflanzenreihe bzw. zur Mitte der Behandlungszone 4f schräg gestellt werden kann. Diese Abschirmungen 67 können ebenfalls durch Schutzplanen gebildet sein. Am vorderen und/oder hinteren Ende weist jede Wandung 6f einen nach Art einer Stoßstange ausgebildeten Rammschutz 68 auf, welcher beim Auflaufen auf Hindernisse die auftretenden Kräfte aufnimmt, so daß die Wandung 6f nicht beschädigt wird.

Um eine solche Beschädigung noch besser zu vermeiden, ist die jeweilige Wandung 6f in ihrem oberen Bereich um ein in Fig. 14 bei 69 angedeutetes Pendelgelenk schwenkbar am zugehörigen Ausleger 8f aufgehängt, wobei die annähernd horizontale Achse dieses Pendelgelenkes etwa rechtwinklig zur Laufrichtung Pfeil 34f bzw. annähernd parallel zur Laufebene liegt sowie unmittelbar hinter dem zugehörigen Kanalausleger 56 vorgesehen sein kann. Dieser Kanalausleger ist mit seinem zugehörigen Ende lediglich durch abgedichtetes Einstecken mit der zugehörigen Wandung 6f verbunden und außerdem sind eventuelle Bewegungen der Wandung 6f um das Pendelgelenk 69 mit nicht näher dargestellten Stoßdämpfern o.dgl. so gedämpft, daß die Wandung 6f nach Auslenkung selbsttätig wieder in ihre Arbeitslage zurückkehrt. Beim Auflaufen auf ein Hindernis kann die Wandung 6f somit um das Pendelgelenk 69 schwenkend ausweichen. Dadurch können auch Beschädigungen der Pflanzungen bei Kollisionen vermieden werden.

Sowohl durch die Ausbildung nach den Figuren 1 bis 3, wie auch durch die Ausbildungen nach den Figuren 7 bis 16 wird vermieden, daß auf der den jeweiligen Austragdüsen gegenüberliegenden Begrenzung der Behandlungszone ein zu hoher Staudruck entsteht, durch welchen der Behandlungsstrom aus der Behandlungszone heraus ins Freie abgelenkt wird. Luftvorhänge nach den Figuren 1 bis 3 können auch bei den Ausbildungen nach den Figuren 5 bis 16 vorgesehen sein. Des weiteren ist es möglich, eine Austragvorrichtung durch Kombination zweier oder mehrerer der dargestellten und beschriebenen Austragvorrichtungen zu bilden, wobei zum Beispiel eine Austragvorrichtung gemäß Fig. 7 in oder quer zur Laufrichtung benachbart zu einer Austragvorrichtung gemäß Fig. 13 angeordnet sein kann. Gemäß Fig. 14 sind die Druckpumpe 12f und das Gebläse 20f über eine Gelenkwelle gemeinsam von der Zapfwelle des Motorfahrzeuges 21f antreibbar, wobei die Gelenkwelle zweckmäßig auf die Druckpumpe 12f wirkt, die ihrerseits über ein Getriebe, beispielsweise einen einstufigen Riementrieb mit dem darüberliegenden Gebläse 20f antriebsverbunden ist. Die erfindungsgemäße Austragvorrichtung eignet sich auch für bodennahe oder ähnliche Pflanzungen.

## Patentansprüche

1. Pflanzenschutz-Austragvorrichtung (1, 1c, 1d, 1e, 1f) mit mindestens einer Austrageinheit (3, 3a, 3b, 3d, 3f) für den Austrag von Behandlungsmedien, die schwebende Teilchen enthalten, und mit wenigstens einer Rückführeinrichtung (17, 17d, 17e, 17f) für nicht von den Pflanzen aufgenommenes Behandlungsmedium, wobei den Pflanzen eine Behandlungszone (4, 4a, 4b, 4d, 4f) im Bereich mindestens einer Aufnahme für die Pflanzen zugeordnet ist, dadurch gekennzeichnet, daß zur Rücksaugung der nicht von Pflanzen aufgenommenen schwebenden Teilchen des Behandlungsmediums die mindestens eine Rückführeinrichtung eine Rücksaugeinrichtung (17, 17d, 17e, 17f) für die schwebenden Teilchen bildet.

2. Austragvorrichtung nach Anspruch 1, dadurch gekennzeichnet, daß die Rücksaugeinrichtung (17, 17d, 17e, 17f) für den Anschluß an mindestens ein Gebläse (20) und an die Aufnahme ausgebildet ist, daß insbesondere die Austragvorrichtung (1) für landwirtschaftliche hochstämmige Reihenkulturen vorgesehen ist sowie als Aufnahme jeweils eine über eine Pflanzenreihe in wenigstens einer Laufrichtung zu verfahrende Austrageinheit (3, 3a, 3b, 3d, 3f) mit einem Durchlaß (4, 4a, 4b, 4d, 4f) für die Pflanzenreihe aufweist und daß vorzugsweise der Durchlaß (4, 4a, 4b, 4d, 4f) mit Austragmitteln für das Behandlungsmedium versehen ist.

3. Austragvorrichtung nach Anspruch 1 oder 2, dadurch gekennzeichnet, daß mindestens einer Behandlungszone (4) zur Bildung wenigstens einer Luftwirbelkammer Luftdüsen (14, 15) zugeordnet sind, daß vorzugsweise die Luftdüsen (14, 15) im Kreislauf an die zurückgeführte Luft einer als Luft-Rücksaugeinrichtung (17) ausgebildeten Rückführeinrichtung angeschlossen sind, daß insbesondere die Luftdüsen (14, 15) gesondert bzw. im Abstand von Austragmitteln für das Behandlungsmedium vorgesehen sind, daß vorzugsweie mehrere der Luftdüsen (14a, 15a) am jeweiligen Ende mindestens einer Behandlungszone (4a) vorgesehen sind, und daß insbesondere mehrere der Luftdüsen (14, 15) übereinander bzw. einander gegenüberliegend unmittelbar benachbart zu mindestens einer Absaugöffnung (18a) für das Behandlungsmedium vorgesehen sind.

4. Austragvorrichtung nach einem der vorhergehenden Ansprüche, dadurch gekennzeichnet, daß Austragmittel bzw. Austragdüsen (11) für das Behandlungsmedium etwa in der Mitte zwischen Enden der Behandlungszone (4) vorgesehen sind, daß vorzugsweise mehrere der Austragdüsen (11) übereinander bzw. einander gegenüberliegend angeordnet sind, daß insbesondere mindestens eine Luftdüse (14, 15) bzw. mindestens eine Austragdüse (11) für das Behandlungsmedium verstellbar ist, und daß vorzugsweise mindestens eine Luftdüse (14, 15) in Höhen- bzw. Längsrichtung der Behandlungszone (4) richtungseinstellbar angeordnet ist.

5. Austragvorrichtung nach einem der vorhergehenden Ansprüche, dadurch gekennzeichnet, daß wenigstens ein Abscheider (26) für überschüssiges Behandlungsmedium vorgesehen ist, daß insbesondere der wenigstens eine Abscheider (26) zwischen mindestens einer Absaugöffnung (18) wenigstens einer Rückführeinrichtung (17) für das Behandlungsmedium und mindestens einem Gebläse (20) an die Rückführeinrichtung (17) angeschlossen ist, daß vorzugsweise mindestens eine Wandung (5a, 6a, 7a) mindestens einer Behandlungszone (4a) wenigstens teilweise als Hohlwandung mit einem Hohlraum ausgebildet ist, und daß insbesondere der Hohlraum in die Strömungswege mindestens einer Rückführeinrichtung (17a) für das Behandlungsmedium bzw. in die Strömungswege mindestens einer Druckluftquelle für Luftdüsen (14a, 15a) einbezogen ist.

6. Austragvorrichtung nach Anspruch 5, dadurch gekennzeichnet, daß die Hohlwandung in gesonderte Kammern (28, 29) für rückzuführendes Behandlungsmedium, Druckluft und/oder abgeschiedene Flüssigkeit unterteilt ist, daß insbesondere die Hohlwandung mit Trennwänden (31) versteift ist, daß vorzugsweise die Absaugöffnungen (18) mindestens einer Rückführeinrichtung (17) für das Behandlungsmedium den größten Teil mindestens einer Begrenzung wenigstens einer Behandlungszone (4) einnehmen, und daß sich vorzugsweise die Absaugöffnungen (18) mindestens einer Rückführeinrichtung (17) gitter-, fenster- bzw. jalousieartig annähernd über die Höhe, Länge und/oder Breite der Behandlungszone erstrecken.

7. Austragvorrichtung nach einem der vorhergehenden Ansprüche, dadurch gekennzeichnet, daß mindestens eine Behandlungszone (4) im Bereich wenigstens eines Endes bzw. im Bereich der Unterseite von einem Luftvorhang abgeschirmt ist, daß insbesondere der Luftvorhang von Luftdüsen (14, 15) gebildet ist und in eine Wirbelzone der Behandlungszone (4) übergeht, und daß vorzugsweise gegeneinander im wesentlichen horizontal gerichtete Luftströme vorgesehen sind.

8. Austragvorrichtung nach einem der vorhergehenden Ansprüche, dadurch gekennzeichnet, daß mindestens eine Behandlungszone (4) seitlich und oben von Seiten- und Deck-Wandungen (5, 6, 7) begrenzt ist bzw. Absaugöffnungen (18) wenigstens einer Rückführeinrichtung (17) für das Behandlungsmedium oben bzw. seitlich an den zugehörigen Wandungen vorgesehen sind, daß vorzugsweise wenigstens eine als Nebel-Rücksaugeinrichtung (17a) ausgebildete Rückführeinrichtung für das Behandlungsmedium von ihrem jeweiligen Rückführeingang (18a) bzw. innerhalb mindestens einer Behandlungszone (4a) im wesentlichen nach oben gerichtete Strömungswege aufweist und daß insbesondere mindestens eine Rückführeinrichtung an der Oberseite der Behandlungszone (4a) einen Absauganschluß (30) aufweist.

9. Austragvorrichtung nach einem der vorhergehenden Ansprüche, dadurch gekennzeichnet, daß im Austragbereich mindestens eines Austragmittels für Behandlungsmedium und im Bereich einer Begrenzung wenigstens einer Behandlungszone (4a) eine rückpralldämpfende Absorbtionseinrichtung für das Behandlungsmedium vorgesehen ist, daß vorzugsweise die Absorbtionseinrichtung mindestens eine für das Behandlungsmedium durchlässige Abdeckung der zugehörigen Absaugöffnung (18a), beispielsweise ein Gitter, Lamellen, ein Netz o.dgl. bildet, und daß insbesondere der Absorbtionseinrichtung eine Anordnung zur Reduzierung bzw. Aufhebung eines Staudruckes durch Unterdruckerzeugung zugeordnet ist.

10. Austragvorrichtung nach einem der vorhergehenden Ansprüche, dadurch gekennzeichnet, daß wenigstens eine Einrichtung (40) zum Leiten mindestens eines Behandlungsstromes in wenigstens zwei aufeinanderfolgende, unterschiedlich gerichtete, annähernd gleich lange Strömungsbahnen (39, 41) vorgesehen ist, daß insbesondere die Strömungsbahnen (39, 41) die Behandlungszone (4d) in im wesentlichen entgegengesetzten Richtungen durchqueren, daß vorzugsweise der Behandlungsstrom wenigstens teilweise zwischen mindestens zwei gesonderten Begrenzungen der Behandlungszone (4d) hin- und hergehend vorgesehen ist, und daß insbesondere die Begrenzungen einander gegenüberstehen.

11. Austragvorrichtung nach einem der vorhergehenden Ansprüche, dadurch gekennzeichnet, daß zur Beschleunigung mindestens eines Behandlungsstromes zwischen dessen Enden eine Beschleunigungs-Einrichtung (63) zur Ausbringung eines Zusatzstromes, wie mindestens eine Luftdüse (14′f) bzw. wenigstens eine Austragdüse (11′f) für Behandlungsmedium, angeordnet ist, und daß vorzugsweise mindestens ein in die Behandlungszone führender Gebläseausgang (14f) und wenigstens eine Umleit-Einrichtung (40) zur Umlenkung des Behandlungsstromes in einen Rückstrom (41f) einander quer zu mindestens einer Laufrichtung (34f) gegenüberliegen, derart, daß neben wenigstens einem Gebläseausgang (14f) mindestens ein Rücksaugeingang (18f) für den Rückstrom (41f) vorgesehen ist.

12. Austragvorrichtung nach Anspruch 11, dadurch gekennzeichnet, daß die Umleit-Einrichtung (40) einen dem Gebläseausgang (14f) zugeordneten Umleiteingang (42) sowie in Laufrichtung (34f) im Abstand vom Umleiteingang (42) einen ins Freie in die Behandlungszone (4f) führenden, auf den Rücksaugeingang (18f) gerichteten Umlenkausgang (43) aufweist, und daß insbesondere unmittelbar neben dem Umlenkausgang (43) ein ins Freie führender Gebläseausgang (14′f) zur Erzeugung eines gegen den Rücksaugeingang (18f) gerichteten, den Rückstrom (41) ggf. zur Beschleunigung überschneidenden Luftstromes vorgesehen ist.

13. Austragvorrichtung nach einem der vorhergehenden Ansprüche, dadurch gekennzeichnet, daß Mittel bzw. mindestens eine Einrichtung (64) zur Erzeugung wenigstens einer Wirbelwalze (65) aus Behandlungsmedium in der Behandlungszone (4f) vorgesehen ist, und daß vorzugsweise entgegengesetzt gerichtet im Abstand zueinander liegende, zwischen sich eine Wirbelzone begrenzende Strömungsbahnen (39f, 41f) vorgesehen sind bzw. der Beschleuniger-Luftstrom wenigstens teilweise an der von der benachbarten Strömungsbahn (39f) abgekehrten äußeren Seite des Rückstromes (41f) liegt.

14. Austragvorrichtung nach einem der vorhergehenden Ansprüche, dadurch gekennzeichnet, daß wenigstens einem Gebläseausgang (14f), mindestens einem Umlenkausgang (23f) für einen Behandlungsstrom und/oder wenigstens einem Rücksaugeingang (42f) für das Behandlungsmedium mindestens ein verstellbarer Strömungs-Richtkörper (47f, 48f) zugeordnet ist, insbesondere derart, daß mindestens einem Richtkörper zugehörige Austragdüsen (11f, 11′f) mit dem Richtkörper verstellbar gekoppelt sind.

15. Austragvorrichtung nach einem der vorhergehenden Ansprüche, dadurch gekennzeichnet, daß wenigstens eine Umleit-Einrichtung (40f) für einen Behandlungsstrom mindestens nach Art einer aufrecht stehenden Leitwanne ausgebildete Auffang- und Umleit-Mittel (6f) aufweist, und daß insbesondere die Leitwanne im Bereich von einem Umleiteingang (42f) zu einem Umlenkausgang (43f) wenigstens ein Abscheide- bzw. Strömungs-leitwerk (44f, 45f), wie einen Lamellensatz, aufweist.

16. Austragvorrichtung nach einem der vorhergehenden Ansprüche, dadurch gekennzeichnet, daß mindestens ein Gebläse (20d) der Austrageinheit als insbesondere wenigstens einen radialen Gebläse-Ausgang bzw. wenigstens eine axiale Gebläse-Ansaugöffnung (36d) aufweisendes Axialgebläse mit etwa in einer Laufrichtung (Pfeil 34d) der Austrageinheit liegender Gebläseachse ausgebildet ist, daß insbesondere radial und/oder axial benachbart zur Gebläse-Ansaugöffnung(36d) wenigstens ein Rücksaugeingang (18d, 52) angeordnet ist, und daß vorzugsweise wenigstens einem Rücksaugeingang (18d, 52) ein Abscheide- und/oder Strömungs-Leitwerk (51), wie ein Lamellensatz, zugeordnet ist.

17. Austragvorrichtung nach einem der vorhergehenden Ansprüche, dadurch gekennzeichnet, daß wenigstens ein auf mindestens ein Gebläse aufsetzbares Leitgehäuse (23d) vorgesehen ist, daß insbesondere das wenigstens eine Leitgehäuse (23d) als Gehäuseöffnungen wenigstens einen seitlich radialen Gebläseausgang (14d) mit Austragdüsen (11d), im axialen Abstand dazu mindestens einen seitlich radialen Rücksaugeingang (18, 52) und am saugseitigen Ende des Gebläses einen vollständig schließbaren Axialeingang aufweist, und daß vorzugsweise die Gehäuseöffnungen wenigstens teilweise mit Klappen (47, 48, 49, 50, 55) o.dgl. zwischen einer Offen- und einer wenigstens angenäherten Schließstellung im wesentlichen unabhängig voneinander veränderbar sind.

18. Austragvorrichtung nach einem der vorhergehenden Ansprüche, dadurch gekennzeichnet, daß mindestens eine Begrenzung (6d) wenigstens einer Behandlungszone (4d), insbesondere die dem Gebläseausgang (14d) gegenüberliegende Begrenzung (6d), im wesentlichen aus einem im Freien liegenden Weg des Behandlungsstromes der Austrageinheit bewegbar ist, und daß vorzugsweise die mindestens eine Begrenzung (6d) in eine gegenüber mindestens einem Gebläse (20d) im wesentlichen axial versetzte und an die Gebläseachse angenäherte Außerbetriebslage überführbar ist.

19. Austragvorrichtung nach einem der vorhergehenden Ansprüche, dadurch gekennzeichnet, daß mindestens ein gelenkiger, gegliederter Kanalausleger (56) vorgesehen ist, der von wenigstens einem Gebläse (20f) zu einer Begrenzung (6f) einer diesem zugeordneten Behandlungszone (4f) führt, daß insbesondere der Kanalausleger (56) zur zugehörigen Umleit-Einrichtung (40f) führt, daß vorzugsweise der Kanalausleger (56) im Bereich der Oberseite der Behandlungszone (4f) liegt, und daß insbesondere eine Deckwand (66) für die Behandlungszone (4f) an der Unterseite des Kanalauslegers (56) liegt.

20. Austragvorrichtung nach einem der vorhergehenden Ansprüche, dadurch gekennzeichnet, daß mindestens eine Öffnung für den Austritt bzw. den Eintritt eines Behandlungsstromes in einer Richtung langgestreckt ist, daß vorzugsweise die Öffnung auf Segmentabschnitten ihrer länge gesondert mit Klappen o.dgl. schließbar ausgebildet ist, und daß insbesondere die Öffnung aufrecht vorgesehen ist.

21. Austragvorrichtung nach einem der vorhergehenden Ansprüche, dadurch gekennzeichnet, daß die Behandlungszone (4d) in wenigstens einem Bereich ihrer Höhe breitenverstellbar ausgebildet ist, wobei insbesondere die mindestens einem Ausgang (14f) der Austrageinheit (3f) gegenüberliegende Begrenzung (6f) der Behandlungszone (4f) mit wenigstens einem Schwenk-Ausleger (8f) quer zur Laufrichtung (Pfeil 34f) verstellbar und in ihrem oberen Bereich um eine etwa in Laufrichtung liegende Stellachse (33f) bzw. um eine quer zur Laufrichtung (Pfeil 34f) liegende Pendelachse (69) schwenkbar ist.

22. Austragvorrichtung nach einem der vorhergehenden Ansprüche, dadurch gekennzeichnet, daß wenigstens ein Gebläse (20d) der Austrageinheit (3d) einen Bestandteil der Austragvorrichtung (1d) bildet, daß vorzugsweise das Gebläse (20d) einschließlich mindestens einer gesamten Austrageinheit (3d) an einem für die aufgesattelte Anordnung an einem Zugfahrzeug (21d) ausgebildeten Traggestell (9d) vorgesehen ist, und daß insbesondere die Austragvorrichtung (1d) auf einem Fahrgestell montierbar ist.

23. Austragvorrichtung nach einem der vorhergehenden Ansprüche, dadurch gekennzeichnet, daß wenigstens ein Behälter für das Behandlungsmedium gesondert von mindestens einer von einem ziehenden Fahrzeug getragenen Austrageinheit auf einem nachgeschleppten Anhänger anzuordnen ist.

## Claims

1. Discharge apparatus for plant protection (1, 1c, 1d, 1e, 1f) with at least one discharge unit (3, 3a, 3b, 3d, 3f) for the discharge of treatment media, which contain floating particles and with at least one return device (17, 17d, 17e, 17f) for the treatment medium not taken up by the plants, a treatment zone (4, 4a, 4b, 4d, 4f) in the vicinity of at least one receptacle for the plants being associated with the latter, characterized in that for the sucking back of the treatment medium particles not taken up by the plant the at least one return device forms a back suction device (17, 17d, 17e, 17f) for the floating particles.

2. Discharge apparatus according to claim 1, characterized in that the back suction device (17, 17d, 17e, 17f) is constructed for connection to at least one blower (20) and to the receptacle, that the discharge apparatus (1) is in particular intended for agricultural standard row crops and has as a receptacle at least one discharge unit (3, 3a, 3b, 3d, 3f) to be moved in at least one movement direction over a plant row and having a passage (4, 4a, 4b, 4d, 4f) for the plant row and that preferably the passage (4, 4a, 4b, 4d, 4f) is provided with discharge means for the treatment medium.

3. Discharge apparatus according to claims 1 or 2, characterized in that with at least one treatment zone (4) for the formation of at least one air turbulence chamber are associated air nozzles (14, 15), that preferably the air nozzles (14, 15) are preferably connected in circuit to the returned air of a return device constructed as an air back suction device (17), that in particular the air nozzles (14, 15) are provided separately or spaced from the discharge means for the treatment medium, that preferably several of the air nozzles (14a, 15a) are provided at the particular end of at least one treatment zone (4a) and that in particular several of the air nozzles (14, 15) are located in superimposed or facing manner, immediately adjacent to at least one suction opening (18a) for the treatment medium.

4. Discharge apparatus according to one of the preceding claims, characterized in that discharge means or nozzles (11) for the treatment medium are provided roughly in the centre between the ends of the treatment zone (4) that preferably several discharge nozzles (11) are superimposed or facing one another, that in particular at least one air nozzle (14, 15) or at least one discharge nozzle (11) for the treatment medium is adjustable and that preferably at least one nozzle (14, 15) is directionally adjustable in the vertical or longitudinal direction of the treatment zone (4).

5. Discharge apparatus according to one of the preceding claims, characterized in that at least one separator (26) is provided for excess treatment medium, that in particular the at least one separator (26) is connected between at least one suction opening (18) of at least one return device (17) for the treatment medium and at least one blower (20) to the return device (17), that preferably at least one wall (5a, 6a, 7a) of at least one treatment zone (4a) is at least partly constructed as a hollow wall with a cavity and that in particular the cavity is incorporated into the flow paths of at least one return device (17a) for the treatment medium or into the flow paths of at least one compressed air source for the air nozzles (14a, 15a).

6. Discharge apparatus according to claim 5, characterized in that the hollow wall is subdivided into separate chambers (28, 29) for treatment medium, compressed air and/or separated liquid to be returned, that in particular the hollow wall is stiffened with partitions (31), that preferably the suction openings (18) of at least one return device (17) for the treatment medium take up most of at least one boundary of at least one treatment zone (14) and that preferably the suction openings (18) of at least one return device (17) extend in grating, window or venetian blind-like manner over approximately the height, length and/or width of the treatment zone.

7. Discharge apparatus according to one of the preceding claims, characterized in that at least one treatment zone (4) in the vicinity of at least one end or in the vicinity of the bottom is shielded by an air curtain, that in particular the air curtain is formed by the air nozzles (14, 15) and passes into a turbulence zone of the treatment zone (4) and that preferably there are oppositely directed, horizontally directed air flows.

8. Discharge apparatus according to one of the preceding claims, characterized in that at least one treatment zone (4) is bounded laterally and from the top by lateral and cover walls (5, 6, 7) or suction openings (18) of at least one return device (17) for the treatment medium are provided at the top or laterally on the associated walls, that preferably at least one return device for the treatment medium constructed as a mist back suction device (17a) has from its return inlet (18a) or within at least one treatment zone (4a) substantially upwardly directed flow paths and that in particular at least one return device has on the top of the treatment zone (4a) a suction connection (30).

9. Discharge apparatus according to one of the preceding claims, characterized in that in the discharge area of at least one discharge means for the treatment medium and in the vicinity of boundary of at least one treatment zone (4a) is provided a rebound-damping absorption device for the treatment medium, that preferably the absorption device forms at least one treatment medium-permeable cover for the associated suction opening (18a), e.g. a grating, lamellas, a netting, etc. and that in particular the absorption device has associated with it an arrangement for reducing or eliminating a dynamic pressure by vacuum production.

10. Discharge apparatus according to one of the preceding claims, characterized in that there is at least one device (40) for guiding at least one treatment flow in at least two succeeding, differently directed, approximately equally long flow paths (39, 41), that in particular the flow paths (39, 41) traverse the treatment zone (4d) in substantially opposite directions, that preferably the treatment flow passes backwards and forwards at least partly between at least two separate boundaries of the treatment zone (4d) and that in particular the boundaries face one another.

11. Discharge apparatus according to one of the preceding claims, characterized in that for accelerating at least one treatment flow between its ends an accelerating device (63) is provided for the discharge of an additional flow, such as at least one air nozzle (14′f) or at least one discharge nozzle (11′f) for the treatment medium and that preferably one blower outlet (14f) leading into the treatment zone and at least one diverting device (40) for diverting the treatment medium into a back flow (41f) face one another transversely to at least one running direction (34f) in such a way that besides at least one blower outlet (14f) there is at least one back suction inlet (18f) for the back flow(41f).

12. Discharge apparatus according to claim 11, characterized in that the diverting device (40) has a diverting inlet (42) associated with the blower outlet (14f) and in the running direction (34f), spaced from the diverting inlet (42), a diverting outlet (43) leading into the open in the treatment zone (4f) and directed onto the back suction inlet (18f) and that in particular immediately alongside the diverting outlet (43) is provided a blower outlet (14′f) leading into the open for producing an air flow intersecting the back flow (41), optionally for acceleration purposes and directed against the back suction inlet (18f).

13. Discharge apparatus according to one of the preceding claims, characterized in that means or at least one device (64) is provided for producing at least one turbulence roll (65) of treatment medium in the treatment zone (4 f) and that preferably in oppositely directed, spaced manner there are flow paths (39f, 41f) defining between them a turbulence zone or the accelerating air flow is at least partly located on the outside of the back flow (41f) remote flow the adjacent flow path (39f).

14. Discharge apparatus according to one of the preceding claims, characterized in that an adjustable flow directional body (47f, 48f) is associated with at least one blower outlet (14f), at least one deflection outlet (23f) for a treatment flow and/or at least one back suction inlet (42f) for the treatment medium, particularly in such a way that discharge nozzles (11f, 11′f) associated with at least one directional body are adjustably poled thereto.

15. Discharge apparatus according to one of the preceding claims, characterized in that at least one diverting device (40f) for a treatment flow has at least one collecting and diverting means (6f) constructed in the manner of an upright guide tank and that in particular the guide tank has in the area from a diverting inlet (42f) to a diverting outlet (43f) at least one separating or flow guidance mechanism (44f, 45f), such as a set of lamellas.

16. Discharge apparatus according to one of the preceding claims, characterized in that at least one blower (20d) of the discharge unit is constructed as an axial blower having at least one blower outlet or at least one axial blower suction opening (36d) with a blower axis roughly in a running direction (arrow 34d) of the discharge unit, that in particular radially and/or axially adjacent to the blower suction opening (36d) is provided at least one back suction inlet (18d, 52) and that preferably at least one back suction inlet (18d, 52) has associated with it a separating and/or flow guidance mechanism (51) , such as a set of lamellas.

17. Discharge apparatus according to one of the preceding claims, characterized in that there is at least one guide casing (23d) mountable on at least one blower, that in particular the at least one guide casing (23d) has as casing openings at least one lateral, radial blower outlet (14d) with discharge nozzles (11d), axially spaced therefrom at least one lateral, radial back suction inlet (18, 52) and at the suction-side end of the blower a completely closable axial inlet and that preferably the casing openings can be modified substantially independently of one another in an at least partial manner with flaps (47, 48, 49, 50, 55) or the like between an open and an at least approximately closed position.

18. Discharge apparatus according to one of the preceding claims, characterized in that at least one boundary (6d) of at least one treatment zone (4d) particularly the boundary (6d) facing the blower outlet (14d), is substantially movable from a path of the discharge unit treatment flow leading into the open and that preferably the at least one boundary (6d) can be transferred into an out-of-operation position substantially axially displaced with respect to at least one blower (20d) and approximately on the blower axis.

19. Discharge apparatus according to one of the preceding claims, characterized in that at least one jointed, articulated channel arm (56) is provided, which leads from at least one blower (20f) to a boundary (6f) of a treatment zone (4f) associated therewith, that in particular the channel arm (56) leads to the associated diverting device (40f), that preferably the channel arm (56) is located in the vicinity of the top of the treatment zone (4f) and that in particular a cover wall (66) for the treatment zone (4f) is located on the underside of the channel arm (56).

20. Discharge apparatus according to one of the preceding claims, characterized in that at least one opening for the outlet or inlet of a treatment flow is elongated in one direction, that preferably the opening is separately closable with flaps or the like over segmental portions of its length and that in particular the opening is upright.

21. Discharge apparatus according to one of the preceding claims, characterized in that the treatment zone (4d) is constructed in width-adjustable manner in at least one area of its height and in particular the boundary (6f) of the treatment zone (4f) facing at least one outlet (14f) of the discharge unit (3f) is adjustable at right angles to the running direction (arrow 34f) with at least one pivoting arm (8f) and in its upper area is pivotable about a control axis (33f) roughly in the running direction or about a pendulum axis (69) at right angles to the running direction (arrow 34f).

22. Discharge apparatus according to one of the preceding claims, characterized in that at least one blower (20d) of the discharge unit (3d) forms a component of the discharge apparatus (1d) , that preferably the blower (20d), including at least one overall discharge unit (3d) is provided on a support frame (9d) constructed for the saddled arrangement on a pulling vehicle (21d) and that in particular the discharge apparatus (1d) is fittable to a chassis.

23. Discharge apparatus according to one of the preceding claims, characterized in that at least one container for the treatment medium is to be located separately from at least one discharge unit carried by a pulling vehicle on a towed trailer.

## Revendications

1. Dispositif de pulvérisation pour la protection des plantes (1, 1c, 1d, 1e, 1f), comprenant au moins une unité de pulvérisation (3, 3a, 3b, 3d, 3f) destinée à la pulvérisation de produits de traitement contenant des particules en suspension, et comprenant au moins un dispositif de recyclage (17, 17d, 17e, 17f) pour le produit de traitement qui n'est pas reçu par les plantes, une zone de traitement (4, 4a, 4b, 4d, 4f) étant associée aux plantes dans la région d'au moins un réceptacle destiné aux plantes, caractérisé par le fait qu'en vue de la recirculation des particules en suspension du produit de traitement qui ne sont pas reçues par les plantes, le dispositif de recyclage au moins constitue un dispositif de recirculation (17, 17d, 17e, 17f) pour les particules en suspension.

2. Dispositif de pulvérisation selon la revendication 1, caractérisé par le fait que le dispositif de recirculation (17, 17d, 17e, 17f) est conformé en vue de son raccordement à au moins un ventilateur (20) et au réceptacle, par le fait que l'appareil de pulvérisation (1) est en particulier prévu pour des cultures agricoles en ligne à haute tige, et qu'il comporte à chaque fois comme réceptacle une unité de pulvérisation (3, 3a, 3b, 3d, 3f) qui est destinée à circuler au-dessus d'une rangée de plantes dans une direction de marche au moins et qui comprend un passage (4, 4a, 4b, 4d, 4f) destiné à la rangée de plantes, et par le fait que le passage (4, 4a, 4b, 4d, 4f) est de préférence muni de moyens de pulvérisation du produit de traitement.

3. Dispositif de pulvérisation selon la revendication 1 ou 2, caractérisé par le fait que des buses à air (14, 15) sont associées à une zone de traitement (4) au moins, pour former au moins une chambre à air tourbillonnant, par le fait que les buses à air (14, 15) sont de préférence raccordées en circuit fermé à l'air recyclé par un dispositif de recyclage réalisé sous la forme d'un dispositif de recirculation de l'air (17), par le fait que les buses à air (14, 15) sont en particulier prévues séparément ou, respectivement, à distance de moyens de pulvérisation destinés au produit de traitement, par le fait que plusieurs des buses à air (14a, 15a) sont de préférence prévues à l'extrémité correspondante d'au moins une zone de traitement (4a), et par le fait que plusieurs des buses à air (14, 15) sont en particulier prévues les unes au-dessus des autres ou, respectivement, en se faisant face mutuellement, au voisinage immédiat d'au moins une ouverture d'aspiration (18a) destinée au produit de traitement.

4. Dispositif de pulvérisation selon l'une des revendications précédentes, caractérisé par le fait que des moyens de pulvérisation ou, respectivement, des buses de pulvérisation (11) destinées au produit de traitement sont prévues entre des extrémités de la zone de traitement (4), et à peu près en leur milieu, par le fait que plusieurs des buses de pulvérisation (11) sont prévues de préférence les unes au-dessus des autres ou, respectivement, en se faisant face mutuellement, par le fait qu'en particulier, au moins une buse à air (14, 15) ou, respectivement, au moins une buse de pulvérisation (11) destinée au produit de traitement peut être déplacée, et par le fait qu'au moins une buse à air (14, 15) est de préférence disposée avec une orientation réglable dans la direction de la hauteur ou de la longueur, respectivement, de la zone de traitement (4).

5. Dispositif de pulvérisation selon l'une des revendications précédentes, caractérisé par le fait qu'au moins un séparateur (26) est prévu pour le produit de traitement en excès, par le fait que le séparateur au moins (26) est raccordé en particulier au dispositif de recirculation (17) entre au moins une ouverture d'aspiration (18) d'au moins un dispositif de recirculation (17) destiné au produit de traitement et au moins un ventilateur (20), par le fait qu'au moins une paroi (5a, 6a, 7a) d'au moins une zone de traitement (4a) est réalisée de préférence, du moins partiellement, sous la forme d'une paroi creuse comprenant un volume creux, et par le fait que le volume creux est en particulier intégré aux trajets d'écoulement d'au moins un dispositif de recyclage (17a) destiné au produit de traitement ou, respectivement, aux trajets d'écoulement d'au moins une source d'air sous pression destinée à des buses à air (14a, 15a).

6. Dispositif de pulvérisation selon la revendication 5, caractérisé par le fait que la paroi creuse est divisée en chambres séparées (28, 29) qui sont destinées au produit de traitement à recycler, à l'air sous pression et/ou au liquide séparé, par le fait que la paroi creuse est en particulier raidie au moyen de cloisons (31), par le fait que les ouvertures d'aspiration (18) d'au moins un dispositif de recyclage (17) destiné au produit de traitement occupent de préférence la plus grande partie d'au moins une délimitation d'au moins une zone de traitement (4), et par le fait que les ouvertures d'aspiration (18) d'au moins un dispositif de recyclage (17) s'étendent de préférence à la manière de grilles, de fenêtres ou, respectivement, de jalousies, approximativement sur toute la hauteur, sur toute la longueur et/ou sur toute la largeur de la zone de traitement.

7. Dispositif de pulvérisation selon l'une des revendications précédentes, caractérisé par le fait qu'au moins une zone de traitement (4) est protégée par un rideau d'air dans la région d'au moins une extrémité ou, respectivement, dans la région du côté inférieur, par le fait que le rideau d'air est en particulier formé par des buses à air (14, 15), et qu'il se prolonge dans une zone de tourbillonnement de la zone de traitement (4), et par le fait qu'il est prévu de préférence des courants d'air qui sont dirigés les uns vers les autres, horizontalement pour l'essentiel.

8. Dispositif de pulvérisation selon l'une des revendications précédentes, caractérisé par le fait qu'au moins une zone de traitement (4) est délimitée latéralement et à sa partie supérieure par des parois latérales et de couverture (5, 6, 7) ou, respectivement, que des ouvertures d'aspiration (18) d'au moins un dispositif de recyclage (17) destiné au produit de traitement sont prévues à la partie supérieure ou latéralement, respectivement, sur les parois associées, par le fait qu'au moins un dispositif de recyclage destiné au produit de traitement et réalisé sous la forme d'un dispositif (17a) de recirculation du nuage présente de préférence des trajets d'écoulement qui sont dirigés vers le haut, pour l'essentiel, depuis leur entrée de recyclage correspondante (18a) ou, respectivement, à l'intérieur d'au moins une zone de traitement (4a), et par le fait qu'au moins un dispositif de recyclage comporte en particulier un raccordement d'aspiration (30) sur le côté supérieur de la zone de traitement (4a).

9. Dispositif de pulvérisation selon l'une des revendications précédentes, caractérisé par le fait qu'un dispositif d'absorption amortissant les rebondissements et destiné au produit de traitement est prévu dans la zone de pulvérisation d'au moins un moyen de pulvérisation destiné au produit de traitement et dans la région d'une délimitation d'au moins une zone de traitement (4a), par le fait que le dispositif d'absorption constitue de préférence au moins un recouvrement perméable au produit de traitement de l'ouverture d'aspiration associée (18a), et par exemple une grille, des lamelles, un treillis ou similaire, et par le fait qu'un dispositif de réduction ou, respectivement, de suppression de la pression dynamique par production d'une dépression est en particulier associé au dispositif d'absorption.

10. Dispositif de pulvérisation selon l'une des revendications précédentes, caractérisé par le fait qu'il est prévu au moins un dispositif (40) pour guider au moins un courant de traitement selon au moins deux trajets d'écoulement successifs (39, 41) qui sont dirigés différemment et dont la longueur est approximativement la même, par le fait que les trajets d'écoulement (39, 41) traversent en particulier la zone de traitement (4d) selon des directions qui sont opposées pour l'essentiel, par le fait que le courant de traitement est prévu de préférence, du moins partiellement, en va-et-vient entre au moins deux délimitations séparées de la zone de traitement (4d), et par le fait qu'en particulier, les délimitations se font face mutuellement.

11. Dispositif de pulvérisation selon l'une des revendications précédentes, caractérisé par le fait qu'en vue d'accélérer au moins un courant de traitement entre les extrémités de celui-ci, il est prévu un dispositif accélérateur (63) destiné à produire un courant supplémentaire, comme au moins une buse à air (14′f) ou, respectivement, au moins une buse de pulvérisation (11′f) destinée au produit de traitement, et par le fait que, de préférence, au moins une sortie de ventilateur (14f) conduisant dans la zone de traitement et au moins un dispositif de déviation (40) destiné à dévier le courant de traitement selon un courant de retour (41f) se font face mutuellement, transversalement par rapport à une direction de marche au moins (34f), et ce, d'une façon telle qu'en plus d'au moins une sortie de ventilateur (14f), il soit prévu au moins une sortie de recirculation (18f) destinée au courant de retour (41f).

12. Dispositif de pulvérisation selon la revendication 11, caractérisé par le fait que le dispositif de déviation (40) comporte une entrée de déviation (42) qui est associée à la sortie (14f) du ventilateur, ainsi qu'une sortie de déviation (43) qui est à distance de l'entrée de déviation (42) dans la direction de la marche (34f), qui conduit à l'air libre dans la zone de traitement (4f) et qui est dirigée vers l'entrée de recirculation (18f), et par le fait qu'il est en particulier prévu, immédiatement à côté de la sortie de déviation (43), une sortie de ventilateur (14′f) conduisant à l'air libre pour engendrer un courant d'air qui est dirigé vers l'entrée de recirculation (18f) et qui recoupe le courant de retour (41), le cas échéant, en vue de l'accélération.

13. Dispositif de pulvérisation selon l'une des revendications précédentes, caractérisé par le fait qu'il est prévu des moyens ou, respectivement, au moins un dispositif (64) destiné à engendrer un rouleau de tourbillons (65) de produit de traitement dans la zone de traitement (4f), et par le fait qu'il est prévu de préférence des trajets d'écoulement (39f, 41f) qui sont dirigés l'un vers l'autre, qui sont situés à distance l'un de l'autre et qui délimitent entre eux une zone de tourbillonnement, ou, respectivement, que le courant d'air de l'accélérateur est situé, du moins partiellement, sur le côté extérieur du courant de retour (41f) qui est opposé au trajet d'écoulement voisin (39f).

14. Dispositif de pulvérisation selon l'une des revendications précédentes, caractérisé par le fait qu'au moins un organe (47f, 48f) qui dirige l'écoulement et qui peut être déplacé est associé à au moins une sortie de ventilateur (14f), à au moins une sortie de déviation (23f) destinée à un courant de traitement et/ou à au moins une entrée de recirculation (42f) destinée au produit de traitement, et ce, en particulier, d'une manière telle que des buses de pulvérisation (11f, 11′f) associées à un organe directeur au moins soient accouplées à l'organe dirigeant l'écoulement en pouvant être déplacées.

15. Dispositif de pulvérisation selon l'une des revendications précédentes, caractérisé par le fait qu'au moins un dispositif de déviation (40f) destiné à un courant de traitement comporte au moins des moyens collecteurs et de déviation (6f) qui sont réalisés à la manière d'une cuvette de guidage verticale, et par le fait qu'en particulier, la cuvette de guidage comporte au moins un mécanisme de séparation ou, respectivement, de guidage de l'écoulement (44f, 45f), comme un jeu de lamelles, dans la région allant d'une entrée de déviation (42f) à une sortie de déviation (43f).

16. Dispositif de pulvérisation selon l'une des revendications précédentes, caractérisé par le fait qu'au moins un ventilateur (20d) de l'unité de pulvérisation est réalisé sous la forme d'un ventilateur axial qui comporte en particulier au moins une sortie radiale de ventilateur ou, respectivement, au moins une ouverture d'aspiration axiale de ventilateur (36d), l'axe du ventilateur étant situé à peu près dans une direction de marche (flèche 34d) de l'unité de pulvérisation, par le fait qu'au moins une entrée de recirculation (18d, 52) est disposée en particulier radialement et/ou axialement au voisinage de l'ouverture d'aspiration (36d) du ventilateur, et par le fait qu'au moins un mécanisme de séparation et/ou de guidage de l'écoulement (51), comme un jeu de lamelles, est de préférence associé à au moins une entrée de recirculation (18d, 52).

17. Dispositif de pulvérisation selon l'une des revendications précédentes, caractérisé par le fait qu'il est prévu au moins un carter de guidage (23d) qui peut être posé sur au moins un ventilateur, par le fait que le carter de guidage au moins (23d) comporte en particulier, comme ouvertures de carter, au moins une sortie de ventilateur (14d) latéralement radiale et comprenant des buses de pulvérisation (11d), au moins une entrée de recirculation (18, 52) latéralement radiale à distance de celle-ci dans le sens axial et, à l'extrémité du ventilateur qui est située du côté de l'aspiration, une entrée axiale pouvant être complètement fermée, et par le fait que les ouvertures de carter peuvent être de préférence modifiées, du moins partiellement, et indépendamment les unes des autres, pour l'essentiel, au moyen de volets (47, 48, 49, 50, 55) ou similaires entre une position ouverte et une position qui est fermée, du moins approximativement.

18. Dispositif de pulvérisation selon l'une des revendications précédentes, caractérisé par le fait qu'au moins une délimitation (6d) d'au moins une zone de traitement (4d), et en particulier la délimitation (6d) qui fait face à la sortie (14d) du ventilateur, peut être déplacée, pour l'essentiel, à partir d'un trajet du courant de traitement de l'unité de pulvérisation qui est situé à l'air libre, et par le fait que la délimitation au moins (6d) peut être de préférence amenée dans une position de mise hors service qui est décalée, pour l'essentiel axialement, par rapport à un ventilateur au moins (20d) et qui s'approche de l'axe du ventilateur.

19. Dispositif de pulvérisation selon l'une des revendications précédentes, caractérisé par le fait qu'il est prévu au moins un porte-à-faux formant canal (56) assemblé et articulé qui conduit d'au moins un ventilateur (20f) à une délimitation (6f) d'une zone de traitement (4f) associée à celui-ci, par le fait que le porte-à-faux formant canal (56) conduit en particulier au dispositif de déviation associé (40f), par le fait que le porte-à-faux formant canal (56) est situé de préférence dans la région du côté supérieur de la zone de traitement (4f), et par le fait qu'une paroi de recouvrement (66) destinée à la zone de traitement (4f) est en particulier située sur le côté inférieur du porte-à-faux formant canal (56).

20. Dispositif de pulvérisation selon l'une des revendications précédentes, caractérisé par le fait qu'au moins une ouverture destinée à la sortie ou à l'entrée, respectivement, d'un courant de traitement est allongée dans une direction, par le fait que l'ouverture est de préférence réalisée en pouvant être fermée séparément sur des portions de sa longueur par des volets ou similaires, et par le fait que l'ouverture est en particulier prévue pour être verticale.

21. Dispositif de pulvérisation selon l'une des revendications précédentes, caractérisé par le fait que la zone de traitement (4d) est réalisée de façon à ce que sa largeur puisse être modifiée, du moins dans une région de sa hauteur, cependant que la délimitation au moins (6f) de la zone de traitement (4f) qui fait face à une sortie (14f) de l'unité de pulvérisation (3f) peut être en particulier déplacée transversalement par rapport à la direction de la marche (flèche 34f) au moyen d'au moins un porte-à-faux pivotant (8f), et que, dans sa région supérieure, elle peut pivoter autour d'un axe (33f) qui est situé à peu près dans la direction de la marche ou, respectivement, autour d'un axe pendulaire (69) qui est situé transversalement par rapport à la direction de la marche (flèche 34f).

22. Dispositif de pulvérisation selon l'une des revendications précédentes, caractérisé par le fait qu'au moins un ventilateur (20d) de l'unité de pulvérisation (3d) forme un élément constitutif du dispositif de pulvérisation (1d), par le fait que le ventilateur (20d), y compris au moins une unité de pulvérisation complète (3d), est de préférence prévu sur une structure porteuse (9d) qui est conformée en vue d'être disposée en étant attelée à un véhicule de traction (21d), et par le fait que le dispositif de pulvérisation (1d) peut être monté en particulier sur un châssis de véhicule.

23. Dispositif de pulvérisation selon l'une des revendications précédentes, caractérisé par le fait qu'au moins un réservoir de produit de traitement est destiné à être monté sur une remorque tractée en étant séparé d'au moins une unité de pulvérisation portée par un véhicule tracteur.
